# EUROPÄISCHE PATENTSCHRIFT

(11) **EP 0 642 067 B1**
(45) Veröffentlichungstag und Bekanntmachung des Hinweises auf die Patenterteilung: **18.12.1996**
(21) Anmeldenummer: 94114043.6
(22) Anmeldetag: 07.09.1994
(51) Int. Cl.: G05B 19/4093

(54) **Dialogorientiertes Programmiersystem für eine CNC-Werkzeugmaschine**
Dialog-oriented programming system for a CNC machine-tool
Système de programmation orientée dialogue pour une machine-outil à CNC

(30) Priorität: 07.09.1993 DE 4330218
(43) Veröffentlichungstag der Anmeldung: 08.03.1995
(73) Patentinhaber: Traub AG, 73258 Reichenbach (DE)
(72) Erfinder: Höfer, Immanuel Dr., D-73669 Lichtenwald (DE); Wirth, Helmut, D-73734 Esslingen (DE)
(74) Vertreter: Schmidt, Steffen J., Dipl.-Ing.

(56) Entgegenhaltungen:
- EP-A- 0 249 639
- EP-A- 0 265 525
- EP-A- 0 269 738
- EP-A- 0 413 921
- DE-A- 2 644 596

## Beschreibung

Die Erfindung betrifft ein dialogorientiertes Programmiersystem für eine Werkzeugmaschine mit den Merkmalen des Oberbegriffs des Anspruchs 1 (Abb. &1 ), bei dem die Synchronisation von NC-Steuerdaten für beliebig viele Teilsysteme angezeigt und jederzeit beliebig geändert werden kann.

Die NC-Steuerdaten stellen eine bestimmte zeitliche Folge von Bearbeitungsschritten auf einer CNC-Maschine mit ihren verschiedenen Einrichtungen, z.B. Werkzeugträgern und Zusatzeinrichtungen dar, und weisen somit eine bestimmte Synchronisation zwischen den, die verschiedenen Einrichtungen steuernden Teilsysteme auf. Auf einem dialogorientierten Programmiergerät kann diese Synchronisation automatisch oder von Hand erstellt, angezeigt und jederzeit beliebig geändert werden, wobei verschiedene Darstellungsarten (Abb. &2, Abb. &3) unterstützt werden.

Dies gilt auch für NC-Steuerdaten, die nicht mit diesem Verfahren und Vorrichtung erstellt wurden. Dabei kann die CNC-Maschine mit beliebig vielen zu steuernden Werkzeugen und/oder Zusatzeinrichtungen ausgestattet sein, die jeweils durch eigene NC-Steuerdaten, von beliebig vielen Teilsystemen aus, gesteuert werden.

Wie in Abb. &1 dargestellt, erfolgen die Eingabe und das beliebige Ändern des gewünschten zeitlichen Ablaufes wahlweise mit einer Tastatur 2 oder/und Zeigeeinrichtung (Maus) 3 bei wahlweiser Darstellung einer Übersicht der Bearbeitungsschritte (Abb. &2), der aufbereiteten NC-Steuerdaten selbst (Abb. &3) und/oder einer Simulation der Bearbeitungschritte.

Nachstehend werden Begriffe erläutert, die für das Verständnis des Standes der Technik und der Erfindung hilfreich sind.

### NC-Steuerdaten:

NC-Steuerdaten sind Steuerbefehle an eine CNC-Maschine. Beispiel Abb. &5. zeigt NC-Steuerdaten in DIN 66025 zu Bearbeitungsbeispiel Abb. &6.

### Teilsysteme:

NC-Steuerdaten können auch mehrere Werkzeuge und/oder Zusatzeinrichtungen steuern, wobei für jedes der Werkzeuge und/oder Zusatzeinrichtungen eigene NC-Steuerdaten auf einem sogenannten Teilsystem vorliegen. Im Prinzip handelt es sich dabei um eigenständige NC-Steuerdaten. Jede dieser eigenständigen Steuerdaten sind ein Teilsystem. Beispiel Abb. &7. zeigt NC-Steuerdaten in DIN 66025 für 2 Teilsysteme.

### Synchronisierte NC-Steuerdaten:

Jedes Teilsystem stellt mit seinen Steuerdaten eine bestimmte zeitliche Folge von Bearbeitungsschritten dar. Die teilsystemspezifischen NC-Steuerdaten laufen unabhängig voneinander ab. Die Kollisionsgefahr von Werkzeugen und Einrichtungen auf den verschiedenen Teilsystemen erfordert aber die zwingende Vorgabe einer zeitlichen Reihenfolge von einzelnen Bearbeitungschritten über die NC-Steuerdaten aller Teilsysteme hinweg. Die Steuerung der Abfolge der Bearbeitungsschritte übergeordnet über alle NC-Steuerprogramme der Teilsysteme hinweg nennt man Synchronisation, die dafür notwendige Datenstruktur sind synchronisierte NC-Steuerdaten.

Beispiel Abb. &8. zeigt NC-Steuerdaten in DIN 66025 für 2 Teilsysteme exemplarisch mit Synchronmarken zum Abgleich der Teilsysteme. Das Prinzip für eine Maschine mit 2 Teilsystemen wird dadurch deutlich. Im vorliegenden Beispiel wird exemplarisch eine Synchronmarke durch ein "!" (Ausrufungszeichen) dargestellt. Die NC-Steuerdaten auf Teilsystem 1 steuern Werkzeug 1, NC-Steuerdaten auf Teilsystem 2 steuern Werkzeug 2. Der Bearbeitungsschritt durch Werkzeug 1 (Vorbearbeitung) muß zeitlich vor dem Bearbeitungsschritt 2 durch Werkzeug 2 (Bohren) ablaufen, da beide Bearbeitungsschritte an der Stirnseite des Werkstückes stattfinden und eine gleichzeitige Bearbeitung zu einer Kollision der Werkzeuge führen würde.

Die CNC-Steuerung der Werkzeugmaschine startet die Abarbeitung der NC-Steuerdaten auf beiden Teilsystemen gleichzeitig. Teilsystem 1 bewirkt die Steuerung der Vorbearbeitung an der Stirnseite. Teilsystem 2 enthält in den NC-Steuerdaten vor den NC-Steuerdaten des Bohrvorganges jedoch die Synchronmarke, was einen STOP für Teilsystem 2 auslöst, solange Teilsystem 1 auf keine Synchronmarke stößt. Erst am Ende der Vorbearbeitung auf Teilsystem 1 liegt diese vor: Beide Teilsysteme laufen weiter, d.h. Teilsystem 1 erreicht bereits das Programmende, Teilsystem 2 steuert den Bohrvorgang.

Werden zusammengehörende Synchronmarken auf gleicher "Höhe" dargestellt, wird die Wechselwirkung der Teilsysteme durch die Synchronmarken besonders deutlich (Abb. &9).

Die Synchronisation bedingt also immer paarweise Synchronmarken der beiden Teilsysteme, die einander zeitlich beeinflussen. Dies gilt auch für mehr als zwei Teilsysteme, wobei jede Synchronmarke noch einen Verweis enthält, auf welches Teilsystem sie sich bezieht. Exemplarisch ist dies in Abb. &10. dargestellt.

Die Erfindung dient zur Festlegung und Änderung einer bestimmten zeitlichen Folge von Bearbeitungsschritten (Synchronisation) auf einem dialogorientierten Programmiergerät zur Erstellung/Änderung von NC-Steuerdaten für eine CNC-Maschine mit beliebig vielen Teilsystemen.

Das Verfahren und seine Vorrichtung ergeben dabei die Möglichkeit eine wesentliche Reduzierung der Programmierzeit für die Erstellung der NC-Steuerdaten, ohne Einbußen bei der Bearbeitungszeit eines Werkstückes auf der CNC-Maschine hinnehmen zu müssen. Insbesondere gilt dies bei einer häufig vorhandenen Trennung von Planung der Bearbeitung eines Werksstückes und der Fertigung und ihrer Vorbereitung in der Werkstatt und bei Wiederholfertigungen eines Werkstückes auf CNC-Maschinen mit unterschiedlicher Anzahl von Teilsystemen.

Bei Bearbeitungsverfahren auf CNC-Maschinen mit n Teilsystemen (z.B. Werkzeugmaschinen mit mehreren Werkzeugschlitten, Werkstückeinspannstellen und/oder Zusatzeinrichtungen) ist es z.B. aus Kostengründen notwendig, die auf die einzelnen Teilsysteme aufzuteilenden Bearbeitungsschritte bereits vor dem eigentlichen "Einfahren" der NC-Steuerdaten auf der CNC-Maschine aufeinander abzustimmen, d.h. zu synchronisieren.

Die Aufteilung der Bearbeitungsschritte auf einzelne Teilsysteme bewirkt einerseits eine optimale Ausnutzung der CNC-Maschine, wobei jedes Teilsystem ein eigenes NC-Steuerprogramm besitzt und seine Einrichtungen über diese verschiedenen Teilsysteme angesteuert werden. Andererseits erfordert die zwingende Vorgabe einer zeitlichen Reihenfolge von einzelnen Bearbeitungschritten oder z.B. die Kollisionsgefahr von Werkzeugen und Einrichtungen, die Steuerung der Abfolge der Bearbeitungsschritte übergeordnet über alle NC-Steuerdaten der Teilsysteme hinweg. Dies geschieht durch Eintragung von Marken (Synchronmarken) in die NC-Steuerungsdaten, die Start/Stop-Bedingungen für die Teilsysteme auslösen.

Im Zusammenhang mit der Erläuterung des Begriffes "Synchronisierte NC-Steuerdaten" wurde das Prinzip des Abgleichs einzelner Bearbeitungsschritte bereits erläutert.

In der Regel sind im Verlauf der NC-Steuerdaten jedes Teilsystemes sehr viele Synchronmarken notwendig, um die Bearbeitung eine Werkstückes optimal zu gestalten.

Die Komplexität des Vorganges der Synchronisation wird durch eine exakte Planung der Arbeitsvorgänge im Vorfeld der eigentlichen Programmierung durch Strukturierung z.B. mit bekannten Mitteln der Netzplantechnik auch mit Rechnerunterstützung, Eingabemöglichkeiten aller Teilsysteme gleichzeitig nebeneinander bei der NC-Programmerstellung auf einem Bildschirm entschärft.

Höhere Techniken setzen an dem fehlenden Überblick über das NC-Steuerprogramm durch Zuordnung der Synchromarken zueinander in einer Zeile über alle Teilsysteme hinweg (Abb. &10) an, wobei der zeitliche Ablauf auf den verschiedenen Teilsystemen bereits gut sichtbar wird.

Die Zusammenfassung logisch zusammengehörender NC-Steuerdaten (z.B. Abb. &10 in Bohren, Vorbearbeiten, Absortieren) zu Bearbeitungsschritten in der Planungsphase für die Programmerstellung und eine dem zeitlichen Ablauf entsprechende Anordnung in einer Übersicht (Blockstruktur), ergeben eine weiter Vereinfachung bei der Erstellung der NC-Steuerdaten. Dabei werden die Synchronmarken in einem Generierungslauf aus der Blockstruktur der Übersicht des NC-Programmes erzeugt.

Die Möglichkeiten der Erzeugung/Löschung/Verschiebung ganzer Bearbeitungsschritte bei automatischer Eintragung/Löschung der Synchronmarken in die NC-Steuerdaten in einem Generierungslauf sind ebenfalls bekannt. Das NC-Steuerprogramm kann in seiner Blockstruktur leicht verändert werden, wobei die Synchronmarken in einer Art Übersetzungslauf aus dem Quellenprogramm der Blockstruktur des NC-Programmes automatisch eingetragen werden und das NC-Programm verändert und optimiert wird. Die Zustände und Abfolge der Bearbeitungsschritte werden häufig anschließend in Form eines in Echtzeit ablaufenden Filmes (Simulation/ Visualisierung) dargestellt. Der Bediener hat dabei die Möglichkeit, einzelne Bearbeitungsprozeßfolgen entsprechend der verwendeten CNC-Maschine zu optimieren. Ein solches Verfahren ist beispielsweise in der EP 0 249 639 A1 beschrieben.

Abb. &11 zeigt eine solche Zusammenfassung der NC-Steuerdaten für einzelne Bearbeitungsschritte in einer Übersicht (Blockstruktur, Blockdiagramm) über das NC-Steuerprogramm, das ebenfalls die Teilsystemzuordnung enthält.

Dialogorientierte Programmiergeräte oder Systeme, mit denen das oben beschriebene Synchronisationsverfahren zum Abgleich von Bearbeitungsabläufen für CNC-Maschinen mit n Teilsystemen durchgeführt werden sind ebenfalls bekannt. Sie sind Teil einer Programmiereinheit, die sich zur automatischen und oder halbautomatischen Erstellung von Steuerprogrammen für solche Maschinen eignen. Sie sind entweder Bestandteil der Maschinensteuerung (Vorortprogrammierung) oder als separater Programmierplatz ausgeführt und über Datenleitung mit der Maschine verbunden. Solche Systeme beruhen im Prinzip auf der Analyse eines zu bearbeitenden Werkstückes mit entsprechender automatischer oder halbautomatischer Festlegung der Variationen von Bearbeitungsschritten. In Abhängigkeit vom jeweils verwendeten Maschinentyp und den Technologiedaten wird dann ein CNC-Programm interaktiv festgelegt und generiert.

Diese Vorgaben können anschließend vom Programmierer und Maschinenbediener überprüft und modifiziert werden. Dies gilt insbesondere für den bei CNC-Maschinen mit n Teilsystemen notwendigen Abgleich (Synchronisation) von Bearbeitungsabläufen. Dies geschieht in der Regel beim Einfahren des NC-Programmes auf Satzebene durch Einfügen/Entfernen oder Verschieben der Synchronisationsmarken.

Durch Veränderungen im Blockdiagramm ist dies ebenfalls möglich, wobei die Synchronmarken des NC-Programmes aus dem Aufbau des Blockdiagrammes in einem weiteren Generierungslauf abgeleitet und eingetragen werden. Dabei werden allerdings beim Einfahren des NC-Programmes auf NC-Satzebene veränderte Synchronmarken nicht übernommen. Der Optimierungvorgang an der Maschine muß also zuerst in der höheren Ebene des Blockdiagrammes erfolgen, da jeweils anschließend das NC-Programm aus dem Blockdiagramm neu erzeugt werden muß und somit die alte Synchronisation verloren geht. Ist die Festlegung der Abfolge der Bearbeitungsschritte beendet, kann erst eine weitere Optimierung der Synchronisation auf NC-Satzebene erfolgen.

Aus der EP-A-0 269 738 ist ein Verfahren und eine Vorrichtung zum Verhindern von Werkzeugkollisionen in einer Vier-Achsen-Drehmaschine bekannt. Bei dieser Drehmaschine ist ein NC-Prozessor zum Ausführen der Programme, eine programmierbare Steuerung für die Satzsteuerung der Drehmaschine, ein Programmspeicher, der durch den Prozessor ausführbare Programme enthält, vorhanden. Der Speicher enthält auch ein Programm zum automatischen Verhindern von Werkzeugkollisionen. Der Ablauf des Programms zum Verhindern von Werkzeugkollisionen ist z.B. in Fig. 6 dieses Dokumentes erläutert. Dabei wird ein zu überprüfendes Maschinenprogramm in den Datenspeicher eingelesen und die Drehmaschine abgeschaltet. Anschließend wird der Drehvorgang auf einem Bildschirm graphisch simuliert. Falls dabei eine Kollision zweier Werkzeuge auftreten sollte, wird in Abhängigkeit von einem dem jeweiligen Werkzeug zugeordneten Prioritätsparameter dem Werkzeug mit der niedrigeren Priorität eine Verweilzeit von vorherbestimmbarer Dauer auferlegt, in dem in das Programm ein Verweilbefehl eingefügt wird. Anschließend wird das Maschinenprogramm an den Anfang zurückgefahren und erneut ein Simulationslauf gestartet. Diese Vorgehensweise wird so oft wiederholt, bis keine Kollisionen bei der Simulation mehr auftreten.

Aus der EP 0 265 525 A1 ist ein Verfahren zur Herstellung eines NC-Programmes für eine Vier-Achsen-Drehmaschine bekannt, bei dem in NC-Programme zur symmetrischen Bearbeitung von Werkstükken Werkzeugverweil-Befehle eingefügt werden um Bearbeitungs- und Verweilvorgänge zweier unabhängiger NC-Programme synchron und symmetrisch zu machen. Dies hat jedoch nichts mit dem erfindungsgemäßen Programmiersystem zu tun, bei dem selektierte Teildaten in Form eines Synchronisationsgerüstes erstellt werden, das durch Bearbeitungsschritte bzw. Maschinenprogrammsätze ergänzbar ist.

Aus der EP 0 413 921 A2 ist eine NC-Steuerung für eine mehrachsige Drehmaschine bekannt, bei der zur Vergrößerung der Flexibilität eine Vielzahl von Steuerworten durch Steuer-Unter-Worte ergänzt ist. Die einzelnen Steuer-Unter-Worte dienen dazu, eine bestimmte Achse oder Ebene zu aktivieren, in der das Steuerwort ausgeführt werden soll.

Aus der DE 26 44 596 A1 ist eine numerische Steuerung für eine Mehrachsenwerkzeugmaschine bekannt, bei der zum simultanen Durchführen von sich auf mehr als ein Koordinatensystem beziehenden Bearbeitungsaufträgen Auftragsgruppen zusammengestellt werden. Diese Auftragsgruppen können simultan durchgeführt werden, wenn sie voneinander unabhängig sind. Wie die Unabhängigkeit der einzelnen Bearbeitungsaufträge festgestellt wird oder wie Daten modifiziert und wie beispielsweise Strukturen in den Programmen modifiziert werden können, kann diesem Dokument nicht entnommen werden.

Aus der EP 249 639 Al ist ein Verfahren zur Bereitstellung von NC-Daten bekannt, bei dem die Reihenfolge von Bearbeitungsschritten, deren Reihenfolge nicht vertauscht werden darf, hintereinander dargestellt werden und Bearbeitungsschritte, deren Reihenfolge vertauscht werden darf, parallel dargestellt werden. Die Entscheidung, ob die Bearbeitungsreihenfolge bestimmter Bearbeitungsschritte parallel oder seriell dargestellt wird, trifft dabei der Programmierer. Das Programmiersystem unterstützt den Programmierer lediglich dabei, wie parallel dargestellte Bearbeitungsschritte in seriell dargestellte Bearbeitungsschritte umgewandelt werden, und umgekehrt.

Diese bisher bekannten Programmiergeräte und Verfahren haben also gravierende Nachteile:
1. Sie beruhen auf der Generierung des NC-Programmes und der dazugehörenden Synchronisationsmarken aus einem Quellenprogramm, das die Blockstruktur der Bearbeitungsschritte darstellt. Die Blockstruktur selbst ist aus dem bereits erzeugten und ggf. an der Maschine optimierten NC-Steuerprogramm nicht mehr herstellbar. Änderungen im Maschinenprogramm werden in das Quellenprogramm nicht rückübersetzt. Bei der Erzeugung gehen Modifikationen der Synchronisationsmarken auf NC-Satzebene verloren.
2. Vorhandene "alte" NC-Steuerprogramme, vor allem auch von Maschinen mit unterschiedlicher Anzahl von Teilsystemen können nur mit hohem Aufwand auf der Ebene der Änderung des NC-Steuerdaten angepaßt werden. Höhere Programmiertechniken sind nicht möglich. Großer Einarbeitungsaufwand und Neuprogrammierung sind die Folge.
3. Vorarbeit und Planung gehen verloren. Rückfluß von Information zwischen Fertigung und Arbeitsplanung werden gestört und unterbrochen.
4. Bei der Einschränkung auf eine höhere Programmiertechnik ist keine optimale Gestaltung des NC-Programmes möglich, weil eine Rückführung der Modifikationen der Synchronisationsmarken aus der NC-Satzebene in die Blockstruktur nicht möglich ist: Dies bedeutet steigende Kosten bei großen Stückzahlen.
5. In der Testphase des erstellten NC-Programmes mittels Simulation/ Visualisierung ist ein zeitaufwendiger Aufwand durch ggf. mehrfache Korrektur Quellenprogramm , Modifikation der NC-Steuerdaten, mehrfaches Erzeugen NC-Steuerdaten, Simulation notwendig.

Die vorliegende Erfindung vermeidet diese Nachteile.

Folgende Prinzipien werden darin verwirklicht:
1. Das Quellenprogramm und das NC-Steuerprogramm sind identisch, insbesondere
   - Quellenprogramm und NC-Steuerprogramm sind identisch und in einer Datenbasis gespeichert. Das NC-Steuerprogramm wird ausgewertet. Dadurch entstehen
      a) Blockstrukturinformationen
      b) Informationen über die Zugehörigkeit der NC-Programmteile zu den einzelnen Bearbeitungsschritten der Blockstruktur.
      c) Informationen über Art und Lage der Synchronmarken im NC-Programm
      d) Ggf. modifiziertes NC-Steuerprogramm.
2. Funktionelle Trennung des Systems in
   a) Datensteuerungseinheit: Datenfilterung/-sortierung und -mischung, insbesondere
      - Ausfiltern von Informationen (la-d)
      - Sortierung und Zusammenfügen der Informationen (siehe la-c) zu neuen NC-Steuerungsdaten, so daß ein modifiziertes NC-Steuerprogramm entsteht,
   b) Editoreinheit: Anzeigen für den Benutzer und Durchführung der Änderungen vom Benutzer des Programmiergeräts, insbesondere
      - Anzeige der Blockstrukturinformationen (1a)
      - Anzeige des modifizierten NC-Steuerprogrammes (1d)
      - Anzeige der Blöcke und Sätze für die Simulation/ Visualisierung der Bearbeitung
      - Änderung der Blockstrukturinformationen (1a)
      - Änderung des NC-Steuerprogrammes (1d)
   c) Rückführungseinheit: Rückführung der Änderungen vom Editor (Informationen 1a + 1d),insbesondere
      - Veränderung der Synchronmarken (Verschieben, Löschen, Erzeugen)
      - Veränderung der Blockstruktur (Verschieben, Löschen, Erzeugen)
      - Start/Stop/Vorlauf/Rücklauf der auf den Teilsystemen gesteuerten Einrichtungen
   d) Synchronisationseinheit: Sicherstellung der Wechselwirkungen zwischen Information (1a - d) in bezug auf die Synchronisation, insbesondere
      - Veränderung der Synchronmarken bei Änderung der Blockstrukturinformationen
      - Veränderung der Blockstrukturinformationen bei Änderung der Synchronmarken

Die Erfindung weist die Merkmale des Anspruchs 1 auf.

Abb. &4a und &4b zeigt den Datenfluß mit den dazugehörenden Steuer-/Funktionseinrichtungen in der Vorrichtung. Dabei gewährleistet die Vorrichtung mit ihren Einheiten (Abb. &4a) die Auswirkung einer zeitlichen Änderung der Reihenholge der Bearbeitungsschritte und ihrer Teilschritte bei jeder der Darstellungsarten.

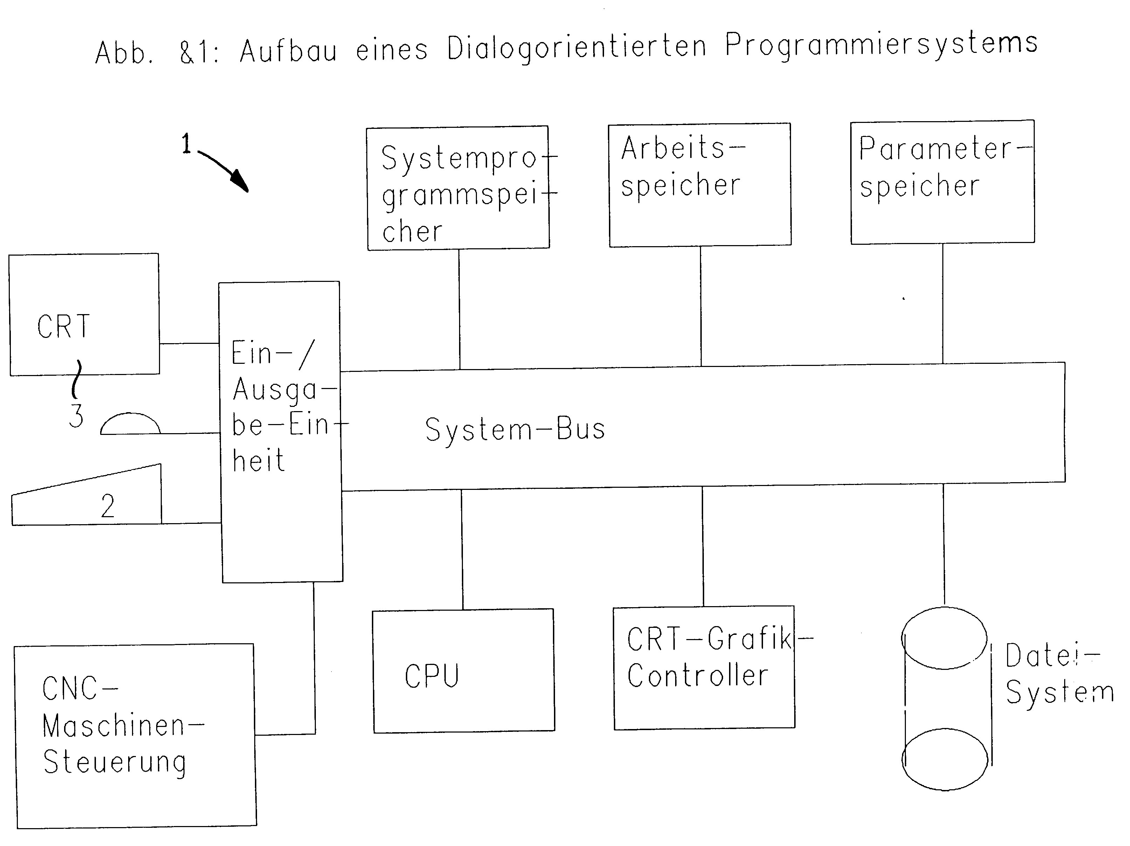

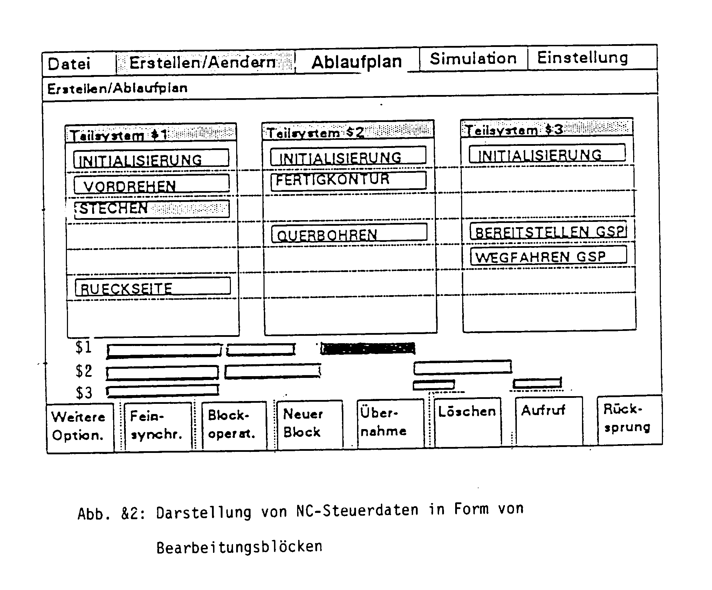

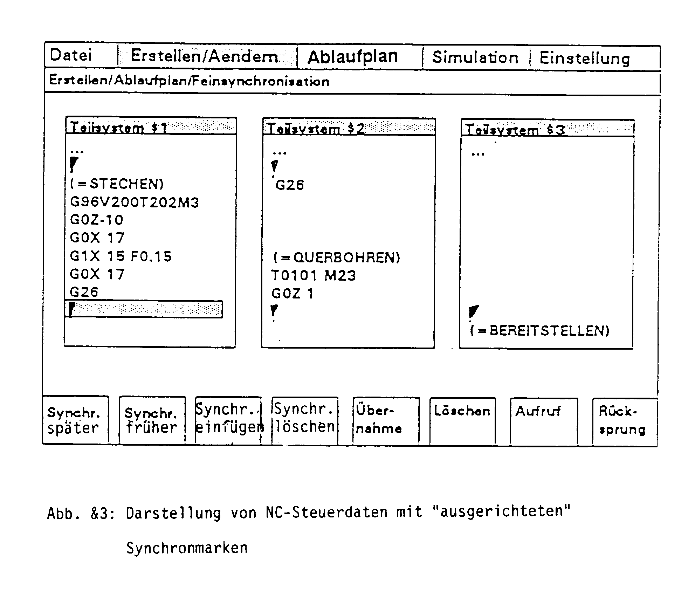

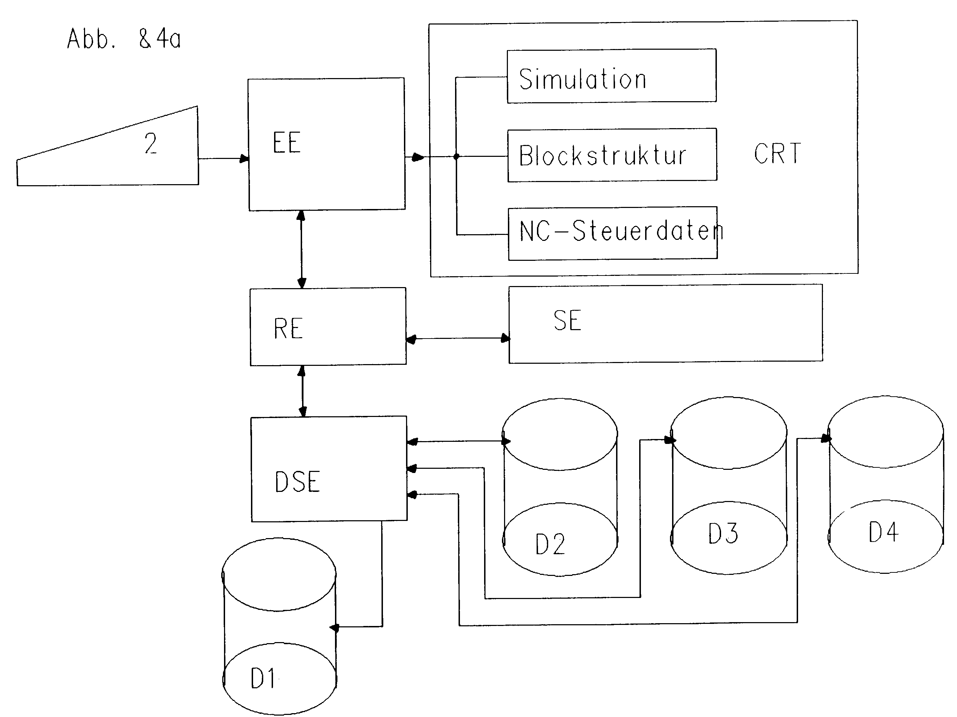

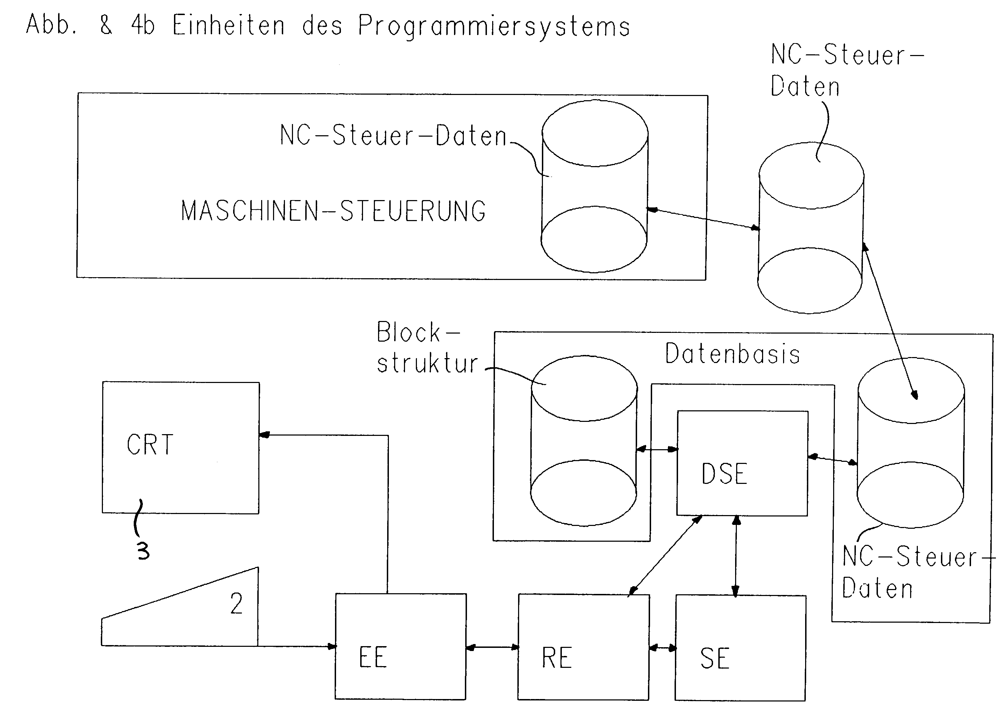

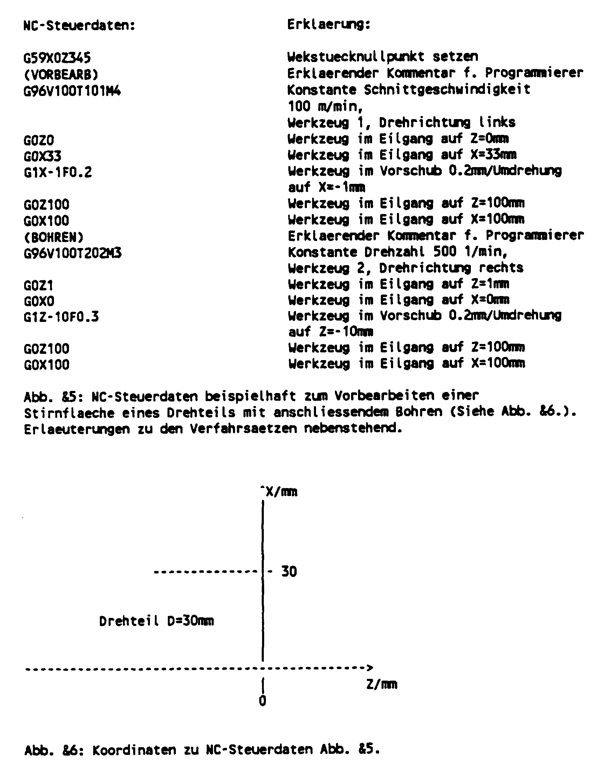

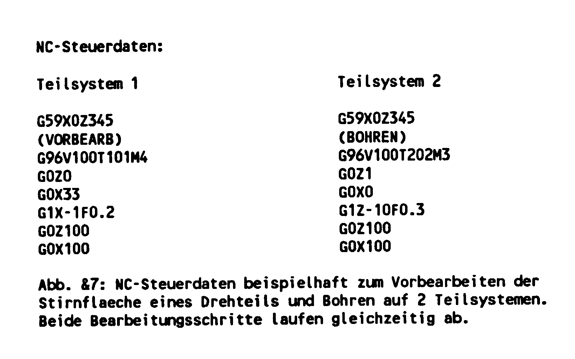

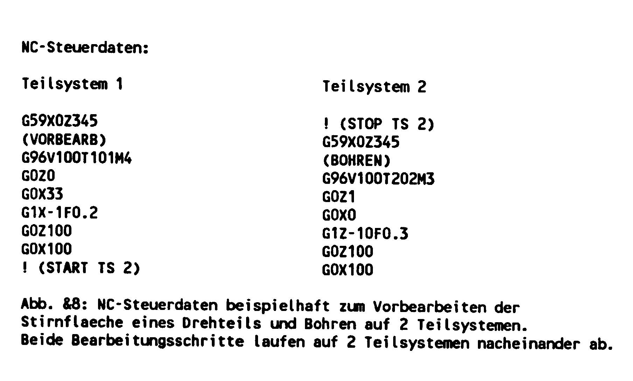

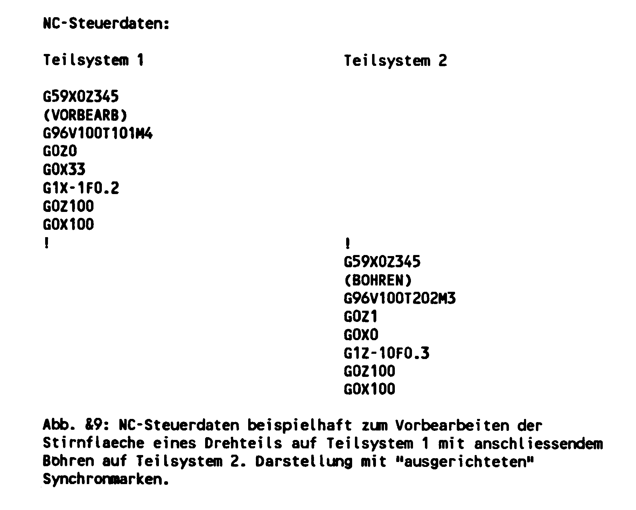

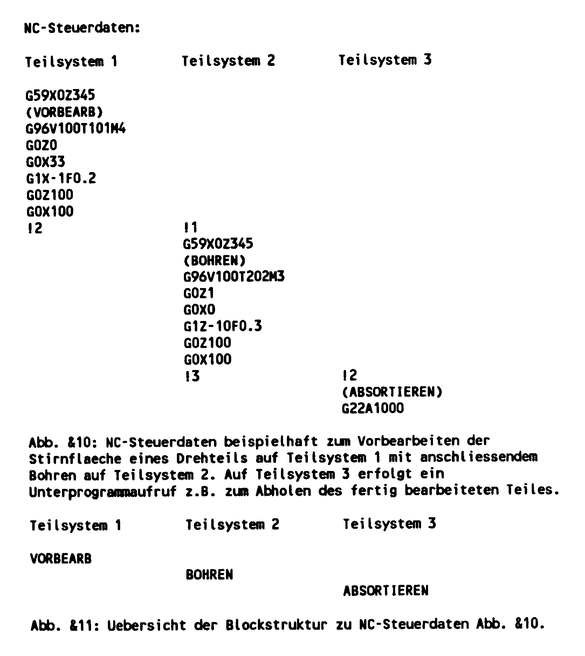

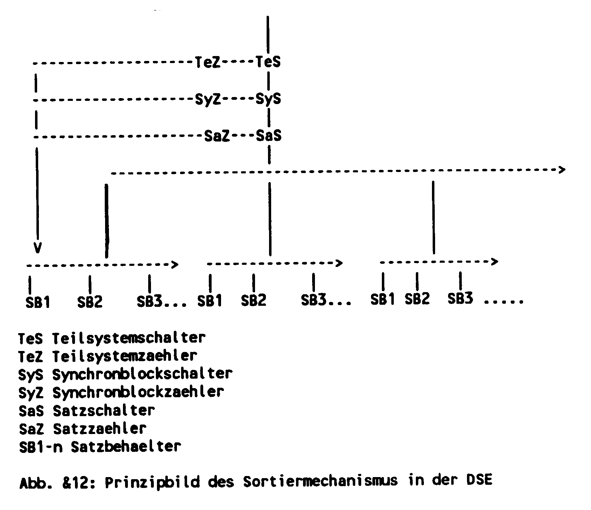

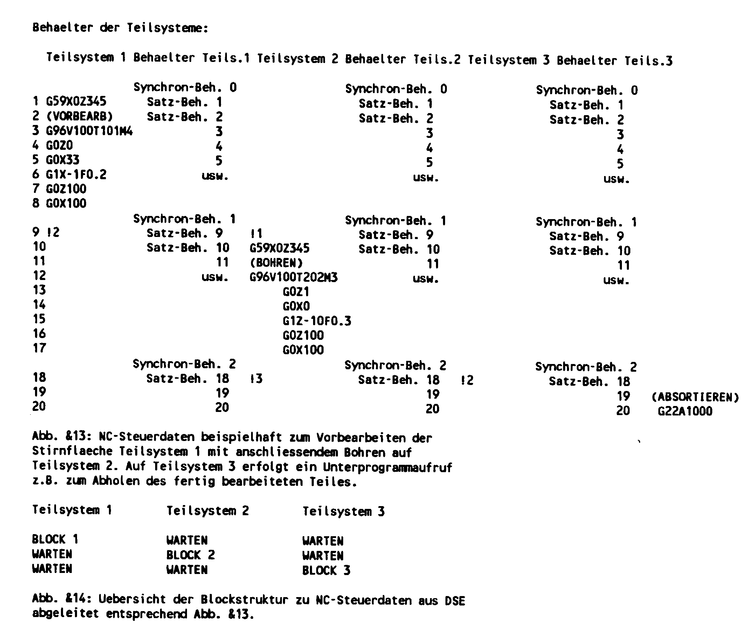

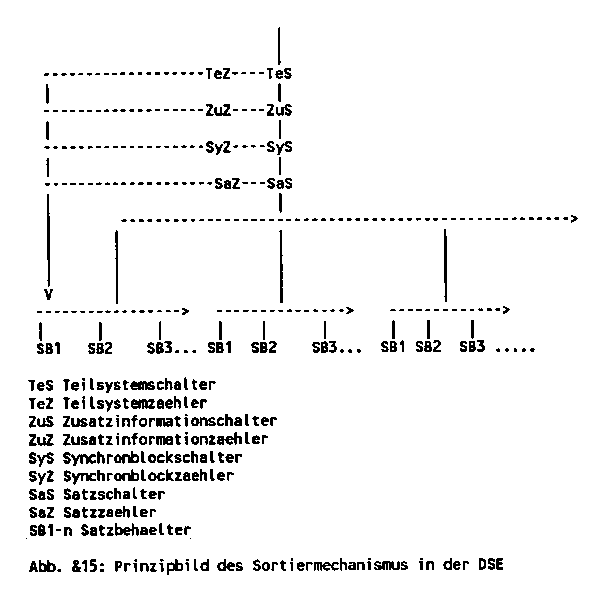

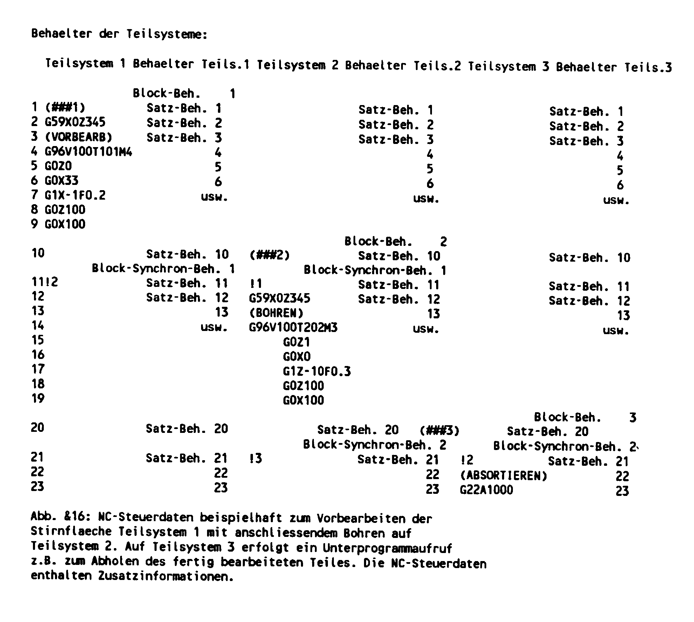

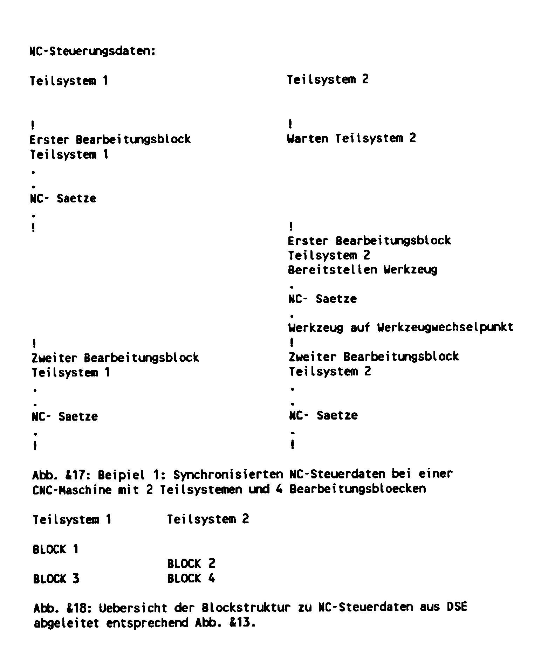

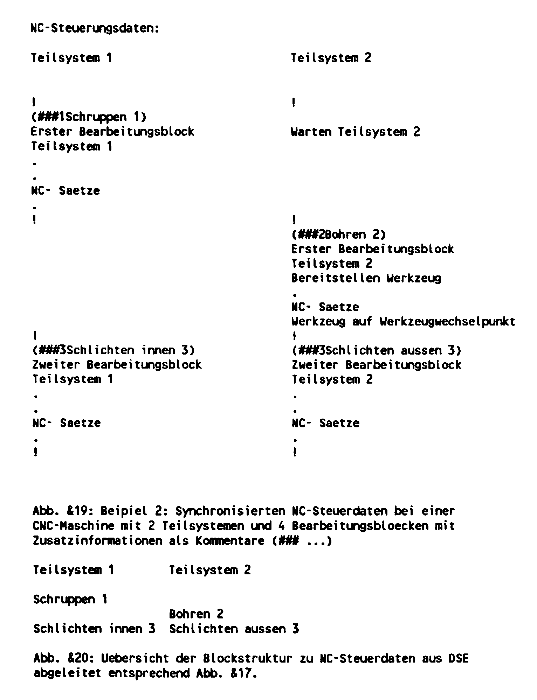

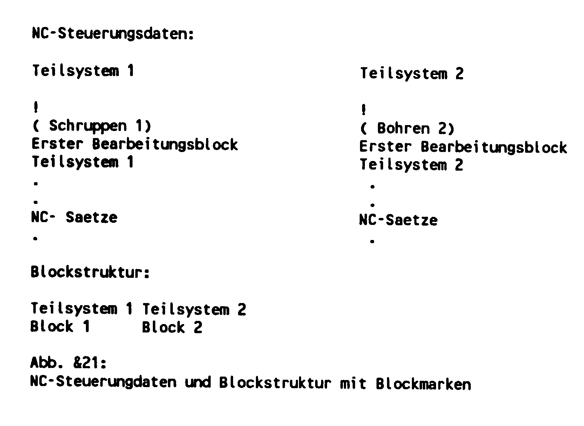

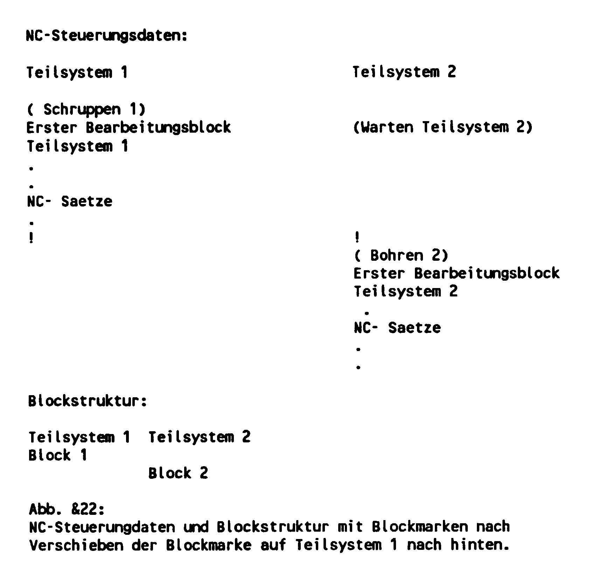

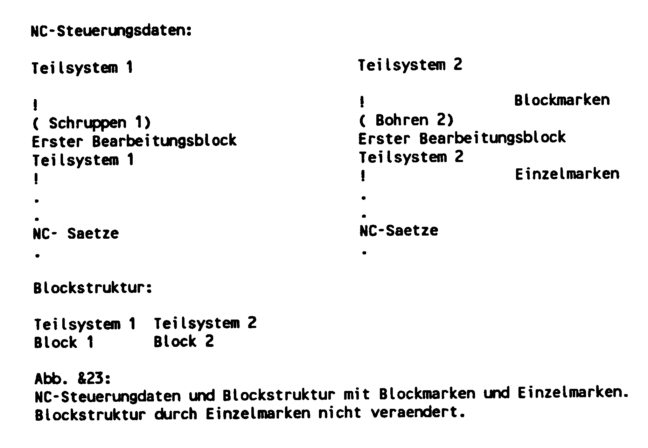

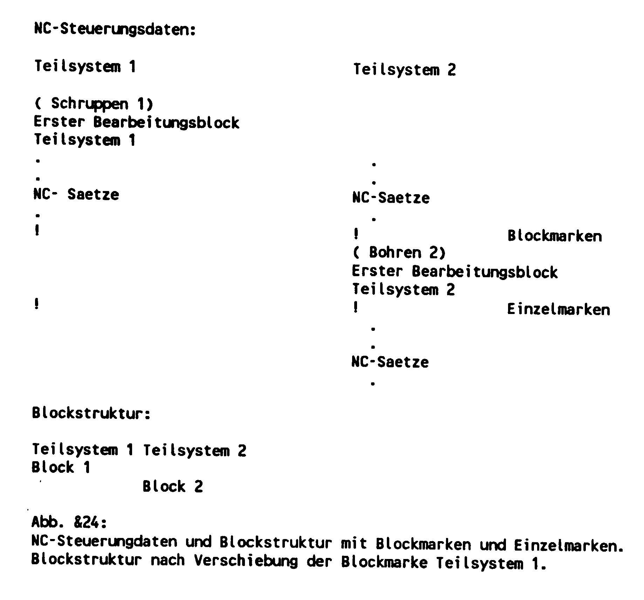

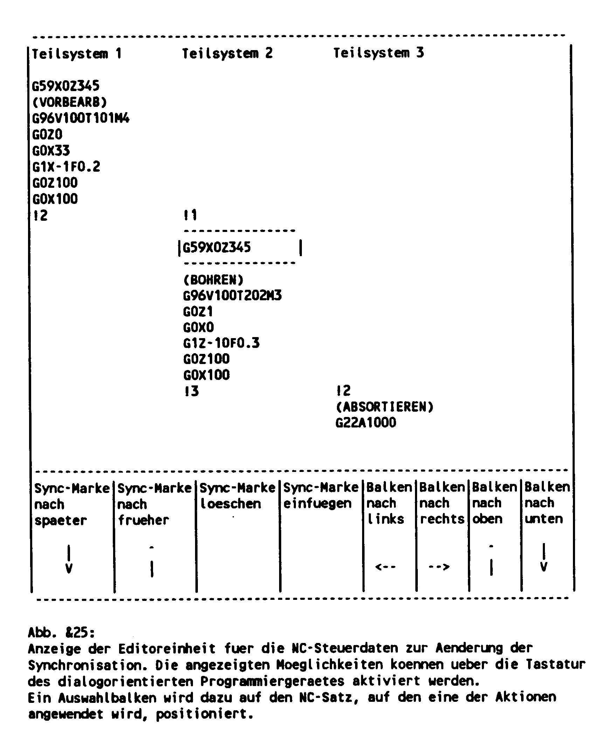

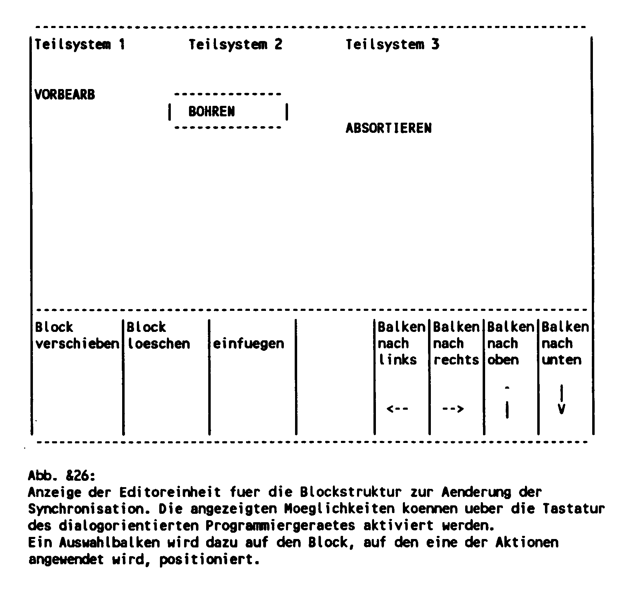

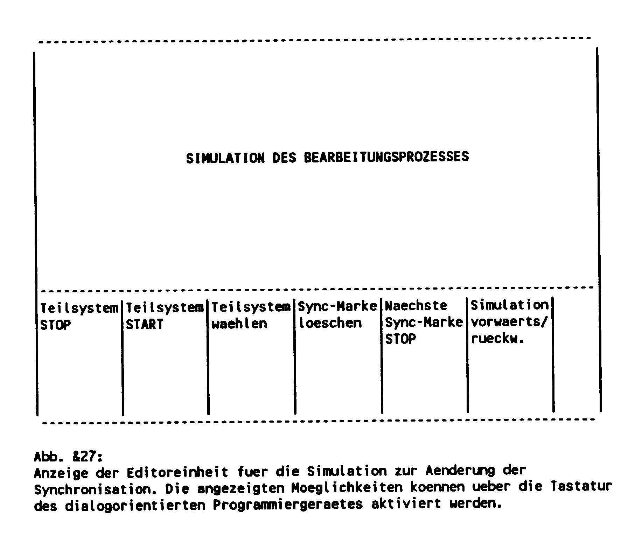

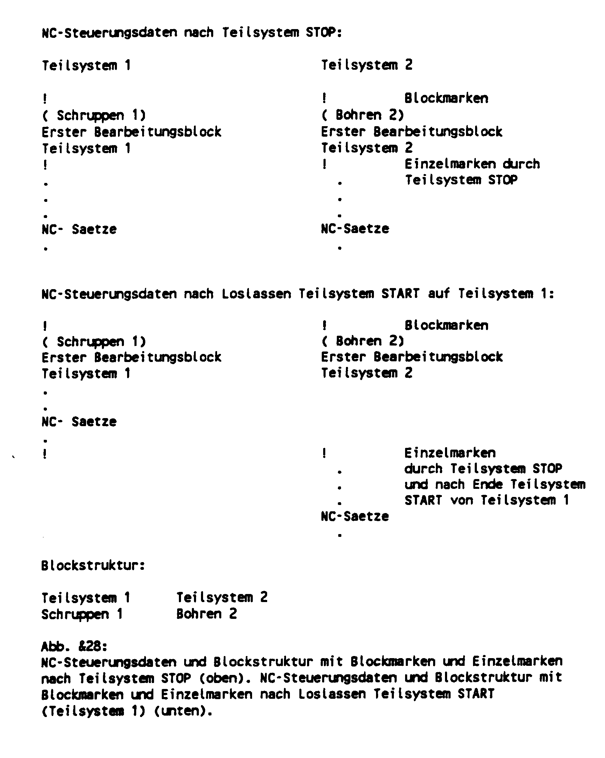

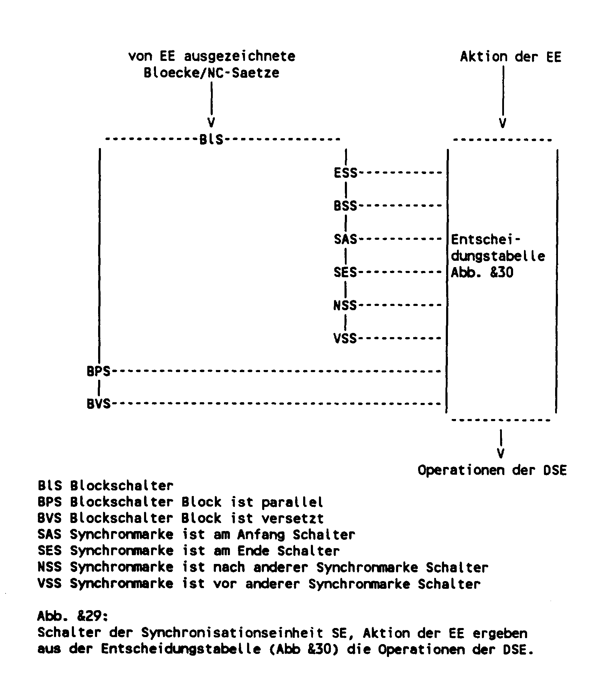

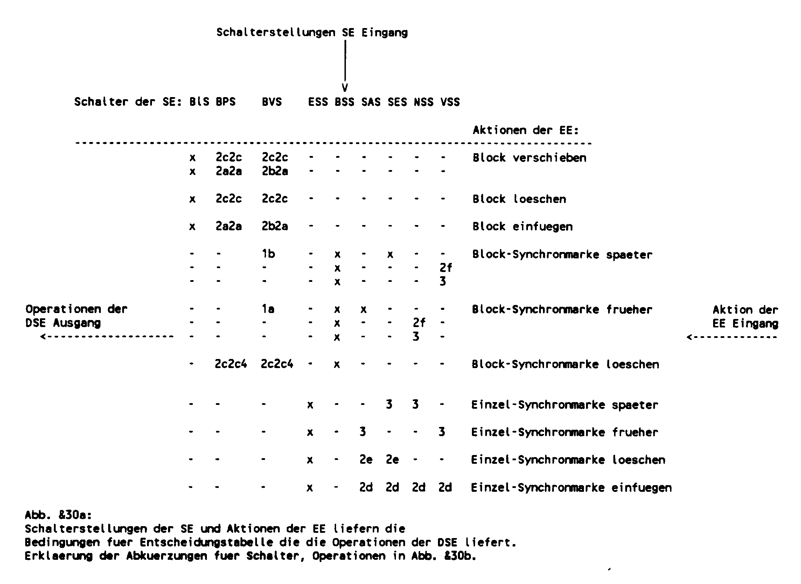

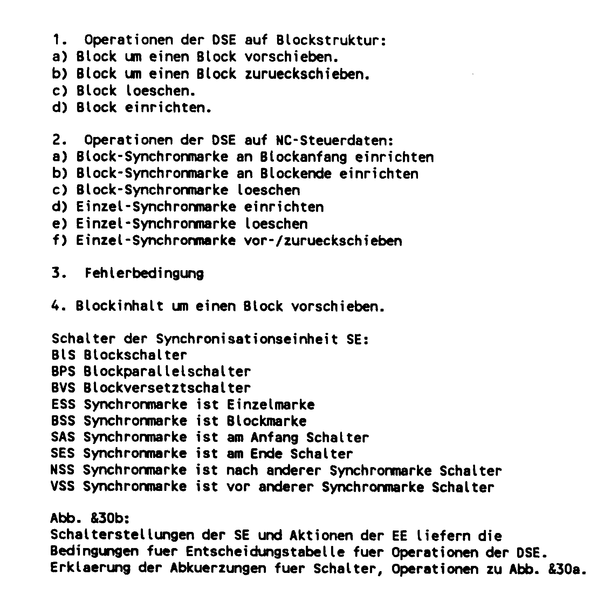

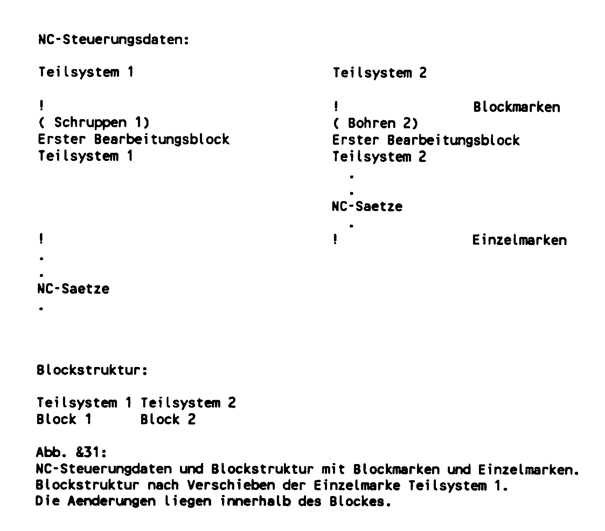

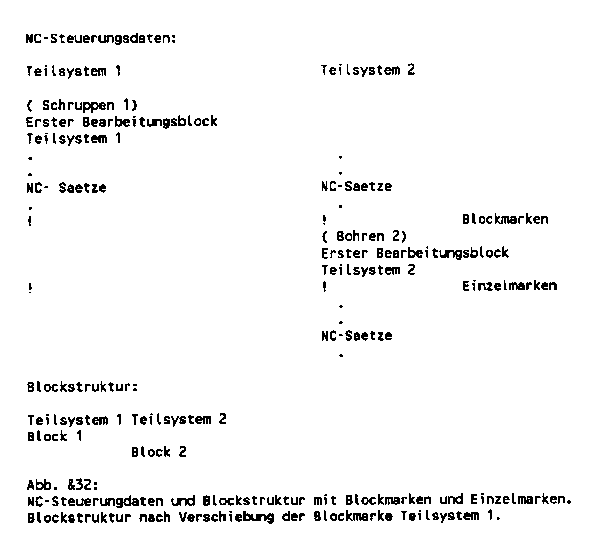

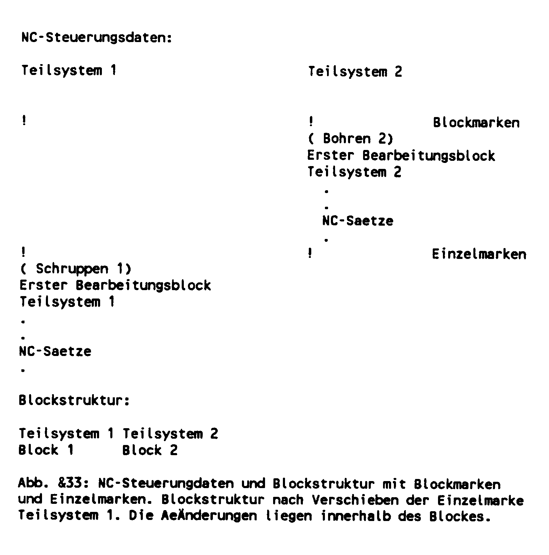

In einer zentralen Speicher- und Verarbeitungseinheit 1 werden dabei die NC-Steuerdaten gespeichert (Abb 1). Auf diese wird durch eine Datensteuerungseinheit DSE zugegriffen (Abb. &4). Diese steuert den Zugriff auf die in der Datenbasis abgelegten NC-Steuerdaten (Abb. &4a D1) und erzeugt aus den NC-Steuerdaten die Steuer- und Dialogdaten (Abb. &4a, D2 - D4), wobei die Datei D2 die Blockstrukturen, die Daten D3 die Verweise und die Datei D4 die Lage und die Art der Synchronmarken enthält.

Diese werden einer (Programm-)Editoreinheit EE zugeführt. Die Editoreinheit EE dient der grafischen und/oder alphanumerische Ein-/Ausgabe als NC-Steuerdaten, als Übersicht der Bearbeitungschritte und der Simulation/Visualisierung der Bearbeitungschritte. Mit ihr wird der zeitliche Ablauf der Bearbeitungsschritte erstellt und/oder geändert. Dabei werden die Daten über eine Rückführungeinheit RE und die Datensteuerungseinheit DSE in die Datenbasis rückgeführt. Eine Synchronisationseinheit SE gewährleistet dabei, daß die in einer Darstellungsart geänderte Synchronisation in allen anderen Darstellungsarten angepaßt werden.

Die Erstellung und/oder Beeinflussung des zeitlichen Ablaufs der NC-Steuerdaten kann mit der Anordnung dieser Einheiten und den mit ihnen verbundenen Verfahren sowohl im Feinabstimmungsbereich einzelner NC-Befehle (NC-Steuerdatensatz-Ebene Abb. &3), im Grobraster des Prozeßablaufes (d.h. in der Übersicht der Bearbeitungsschritte Abb. &2) als übergeordnetem Planungshilfsmittel, als auch während der Simulations- und Visualisierungsphase erfolgen. Die übliche Art der NC-Steuerdatenerstellung bleibt davon unberührt, d.h. auf andere Art erstellte NC-Steuerdaten können auch weiterverarbeitet werden.

Damit wird erreicht, daß der Programmierer NC-Steuerdaten erstellen kann, die in Bezug auf den Funktionsumfang und den Programmierablauf gegenüber herkömmlichen Programmiersystemen erhebliche Vorteile bringen.

Die Erfindung wird im folgenden anhand der schematischen Zeichnungen genauer beschrieben werden. Es zeigen:
- Abb. &1:: ein Blockschaltbild eines dialogorientierten Programmiersystems nach dem Stand der Technik,
- Abb. &2:: eine schematische Darstellung von NC-Steuerdaten in Form von Bearbeitungsblöcken,
- Abb. &3:: eine schematische Darstellung von NC-Steuerdaten mit "ausgerichteten" Synchronmarken,
- Abb. &4a und &4b:: Blockschaltbilder des erfindungsgemäßen dialogorientierten Programmiersystems,
- Abb. &5:: ein Beispiel für NC-Steuerdaten nach dem Stand der Technik,
- Abb. &6:: Koordinaten zu den in Abb. &5 gezeigten NC-Steuerdaten,
- Abb. &7:: ein Beispiel von NC-Steuerdaten für zwei Teilsysteme mit gleichzeitig ablaufenden Bearbeitungsschritten,
- Abb. &8:: ein Beispiel für NC-Steuerdaten für zwei Teilsysteme mit nacheinander ablaufenden Bearbeitungsschritten,
- Abb. &9:: das Beispiel von Abb. &8 mit "ausgerichteten" Synchronmarken,
- Abb. &10:: ein weiteres Beispiel von NC-Steuerdaten mit einem Unterprogrammaufruf,
- Abb. &11:: eine Übersicht der Blockstruktur der NC-Steuerdaten von Abb. &10,
- Abb. &12:: ein Prinzipbild des erfindungsgemäßen Sortiermechanismus der DSE,
- Abb. &13:: ein weiteres Beispiel von NC-Steuerdaten mit gegenseitiger Synchronisierung von drei Teilsystemen,
- Abb. &14:: die Blockstruktur der NC-Steuerdaten von Abb. &13,
- Abb. &15:: ein weiteres Prinzipbild des erfindungsgemäßen Sortiermechanismus in der DSE,
- Abb. &16:: ein Beispiel von NC-Steuerdaten mit Zusatzinformationen,
- Abb. &17:: ein erstes Beispiel von synchronisierten NC-Steuerdaten,
- Abb. &18:: die Blockstruktur der NC-Steuerdaten von Abb. &17,
- Abb. &19:: ein zweites Beispiel von synchronisierten NC-Steuerdaten,
- Abb. &20:: die Blockstruktur der NC-Steuerdaten von Abb. &19,
- Abb. &21:: ein Beispiel von NC-Steuerdaten und einer Blockstruktur mit Blockmarken,
- Abb. &22:: die Daten und Struktur von Abb. &21 nach Verschieben der Blockmarke auf Teilsystem 1 nach hinten,
- Abb. &23:: ein Beispiel von NC-Steuerdaten und einer Blockstruktur mit Blockmarken und Einzelmarken,
- Abb. &24:: die Daten und Struktur von Abb. &23 nach Verschieben der Blockmarke von Teilsystem 1,
- Abb. &25:: eine beispielhafte Anzeige der erfindungsgemäßen Editoreinheit für die NC-Steuerdaten zur Änderung der Synchronisation,
- Abb. &26:: eine beispielhafte Anzeige der erfindungsgemäßen Editoreinheit für die Blockstruktur zur Änderung der Synchronisation,
- Abb. &27:: eine beispielhafte Anzeige der erfindungsgemäßen Editoreinheit für die Simulation zur Änderung der Synchronisation,
- Abb. &28:: ein Beispiel von NC-Steuerdaten und einer Blockstruktur mit Blockmarken und Einzelmarken nach Teilsystem STOP bzw. nach Loslassen Teilsystem START,
- Abb. &29:: Schalter der erfindungsgemäßen Synchronisationseinheit SE,
- Abb. &30a:: eine Entscheidungstabelle für die Operationen der erfindungsgemäßen Datensteuereinheit DSE,
- Abb. &30b:: eine Übersicht über die von der erfindungsgemäßen Datensteuereinheit DSE ausgelösten Operationen,
- Abb. &31:: ein Beispiel von NC-Steuerdaten und einer Blockstruktur mit Blockmarken und Einzelmarken,
- Abb. &32:: die Daten und Struktur von Abb. &31 nach Verschieben der Blockmarke Teilsystem 1, und
- Abb. &33:: die Daten und Struktur von Abb. &31 nach Verschieben der Einzelmarke Teilsystem 1.

Erfindungsgemäß laufen folgende Vorgänge in der Vorrichtung ab:

Durch die Datensteuerungseinheit wird es bei der vorliegenden Erfindung möglich, in einer beliebigen Anzeige/Darstellungsart durchgeführte Änderungen, auch in jeder beliebigen anderen auch "höherwertigen" Darstellung sofort verfügbar zu haben. Durch diese Einheit steht dem Anwender jede beliebige Darstellung zur Änderung zur Verfügung. Ferner ist somit eine hohe Flexibilität bei Programmoptimierungen gegeben.

Die Darstellungsarten sind hierbei:
1. NC-Steuerungsdaten, als NC-Steuersätze direkt
2. Übersicht der Bearbeitungsblöcke (Blockstruktur)
3. Simulation/Visualisierung der Bearbeitung

Die Datensteuerungseinheit DSE zerlegt die NC-Steuerungsdaten in Blockstrukturinformation entsprechend der Lage der Synchronisationsmarken der NC-Steuerdaten. z.B. kann dies durch folgenden Mechanismus ohne Einschränkung der Allgemeinheit bewerkstelligt werden. Zu diesem Zweck werden die NC-Steuerdaten von der Datensteuerungseinheit DSE verarbeitet, wobei die Datensteuerungseinheit DSE wie ein "Sieb" die NC-Steuerdaten siebt. Dazu enthält die Datensteuerungseinheit DSE drei Schalter. Der erste Schalter (Teilsystem-Schalter TeS) spricht bei Auftreten oder Aktivieren eines Teilsystemes in den NC-Steuerdaten an. Der zweite Schalter (Synchronmarken-Schalter SyS) spricht bei Auftreten einer Synchronmarke in einem Teilsystem an. Der dritte Schalter (Satzschalter SaS) spricht bei Auftreten eines NC-Satzes in den NC-Steuerdaten an.

Jedem der Schalter ist ein Zähler (Satzzähler SaZ, Teilsystem-Zähler TeZ und Synchronmarken-Zähler SyZ) nachgeschaltet.

Die Schalter steuern die ankommenden NC-Steuerdaten(sätze) entsprechend den Zählerständen in verschiedene Behälter:
1. Teilsystem-Behälter entsprechend n-Teilsystemen
2. Synchronmarken-Behälter entsprechend der Anzahl der Synchronmarken
3. Satz-Behälter entsprechend der Anzahl der Sätze.

Dabei oder anschließend werden die NC-Steuerungsdaten sortiert.

Im ersten Sortiervorgang wird nach Teilsystemen sortiert.

Im zweiten Sortiervorgang wird nach Synchronmarken sortiert. Im dritten Sortiervorgang wird nach NC-Sätzen sortiert.

Das Prinzipbild der Schalter nach Abb. &12 (Schalter TeS, SyS und SaS) zeigt, daß dabei Auftreten von Teilsystem, Synchronmarke bzw. Satz auf allen Behältern weitergeschaltet werden muß (gesteuert durch die Zähler TeZ, SyZ und SaZ), d.h. der Sortiervorgang läuft parallel auf allen Teilsystemen ab. Dadurch ergibt sich das Zeitraster des sortierten NC-Steuerdaten mit den Zählerständen durch die Nummern der Gefäße. Leere Gefäße sind Wartezeiten. Die einzelnen Gefäße können als verkettete Listen oder als Datenfelder strukturiert sein.

Abb. &13. zeigt das Raster für das Beispiel aus Abb. &10.

Damit ist bereits eine Aufbereitung der NC-Steuerdaten zur Anzeige in der Editoreinheit erfolgt:
1. Synchronmarken sind ausgerichtet und können auf NC-SatzEbene informativ angezeigt werden.
2. Die Blockstruktur durch die Synchronistation ist extrahiert: Synchronbehälter mit nur leeren Satzbehältern stellen keine Bearbeitungsschritte dar (Wartezeiten der Teilsysteme!).
3. Es ist ermittelt, welche NC-Sätze zu welchen Blöcken gehören.

Weiter ist für die Synchronisationseinheit festgelegt:
1. Welche Synchronmarken zu welchem Block gehören.
2. Wie neue oder entfernte oder verschobene Synchronmarken den Blöcken zuzuordnen sind und damit ggf. die Blockstruktur beeinflussen.

In der Speichereinheit werden folgende Informationen gespeichert:
1. Blockstrukturinformation (Abb. &14.) bedeutet eine Anzeige der Bereiche der einzelnen Teilsysteme als Zeitachse und symbolische Kennzeichnung der Bereiche in denen bearbeitet wird und der Bereiche in denen Wartebedingungen auftreten.
2. Weiter sind neben den Blockstrukturinformationen Verweise auf die NC-Programmteile im den NC-Datensätzen notwendig (als D3 Abb. &4a). Dabei werden die NC-Steuerdaten entsprechend den Blöcken strukturiert (Abb. &14).

Diese Informationen sind redundant, und damit unmittelbar aus den NC-Steuerdaten ableitbar. D.h. das Hilfsmittel einer Zwischenspeicherung ist nicht zwingend. Die Informationen können immer direkt aus den NC-Steuerdaten abgeleitet werden.

In umgekehrter Richtung (d.h. von den internen, aufbereiteten Informationen zu den NC-Steuerdaten für die CNC-Maschine) werden aus den internen, aufbereiteten NC-Steuerdaten, die NC-Steuerdaten für die CNC-Maschine leicht durch Aneinanderreihen der NC-Sätze aus den Behältern erzeugt.

Unmittelbar nach der Aufbereitung der NC-Steuerdaten durch die DSE werden Zusatzinformationen in die NC-Steuerdaten als Kommentar eingetragen. D.h. in den internen NC-Steuerdaten wird vor dem ersten Satz-Behälter des Synchronbehälters ein neuer Satz-Behälter mit einem Blocknamen und der Nummer des Blockes als NC-Satz-Kommentar eingefügt. Erfindungsgemäß können diese Zusatzinformationen auch durch andere Hilfsmittel aus der NC-Programmierung (z.B. Satznummern) eingebracht werden. Diese stellen unmittelbar die (Synchronisations-) Blockstruktur von NC-Steuerdaten dar.

Solange der NC-Programmierer keine Synchronmarken von Hand einträgt, sind diese Zusatzinformationen redundant.

Die Datensteuereinheit DSE unterscheidet also NC-Steuerdaten mit und ohne Zusatzinformationen. Dabei sind Zusatzinformationen von der vorliegenden Vorrichtung zusätzlich in die NC-Steuerdaten eingetragene Informationen. NC-Steuerdaten ohne Zusatzinformationen sind auf einem anderen Programmierplatz ohne vorliegende Vorrichtung erstellt. Beim Arbeiten mit der vorliegenden Vorrichtung werden diese jedoch dann im Verlauf des vorliegenden Verfahrens durch die Datensteuereinheit DSE eingetragen.

Zur Verarbeitung der Zusatzinformationen ist dem Schalter SyS ein Schalter ZuS vorgelagert. Dieser übernimmt zusammen mit dem Zähler der Zusatzinformationen ZuZ die Sortierung in die Blockstruktur. Da der Schalter SyS auch vorhanden und deshalb beim Ansprechen des Schalters ZuS auch anspricht, wenn die der Blockstruktur zugehörende Synchronmarke erfaßt wird, können weitere, von Hand oder von anderen Programmiergeräten eingefügte Synchronmarken als solche erkannt und als zusätzliche Synchronmarken verwaltet werden ohne das die gewünschte, vorhandene Blockstruktur zerstört wird.

Auf diese Weise kann das Programmiergerät 2 Arten von Synchronmarken unterscheiden:
1. Blockmarken: Entsprechen der durch die Zusatzinformationen beschriebenen Blockstruktur.
2. Einzelmarken: Marken, die nicht unter 1. zuzuordnen sind.

Die weiteren von Hand oder von anderen Programmiersystemen eingefügten Synchronmarken entsprechen nämlich nicht den Zusatzinformationen der Blockstruktur.

Abb. &15. und Abb. &16. zeigen den Aufbau der Datensteuereinheit DSE und die erweiterten Strukturen, die die Datensteuereinheit DSE mit der Zusatzinformation ZuZ und dem Schalter ZuS erzeugt.

Beispiel 1: Ohne Zusatzinformationen (z.B. bei "alten" NC-Programmen) entsprechend Abb. &17. ergibt sich Blockstruktur in Abb. &18.

Beispiel 2: Mit Zusatzinformationen entsprechend Abb. &19.ergibt sich die Struktur Abb. &20.

Diese erzeugten Blockinformationen mit Zusatzinformationen dienen gleichzeitig zur Anzeige der Blockstruktur.

In der Datensteuereinheit DSE werden 2 Arten von Aktionen unterschieden:
1. Änderungen der Blockstruktur: Solche Änderungen sind zum Beispiel Blöcke verschieben, löschen und neue erzeugen.
2. Änderung der Feinstruktur in der Synchronisation der NC-Steuerdaten. Solche Änderungen sind zum Beispiel Synchronmarken verschieben, löschen und neue erzeugen.

Dabei laufen in der in der Datensteuereinheit DSE folgende Funktionen ab:

Zugriffe auf die Blockstruktur (Abb. 4a, Datei D2) wirken auf Datei 1 mit den NC-Steuerdaten. Dies ist durch die von der DSE erzeugten und verwalteten Verweise möglich, welche NC-Steuerdatenbereiche zu welchen Blöcken der Blockstruktur gehören. Diese Verwaltungsinformationen sind in Abb. &4a, Datei D3 abgelegt. Die Datensteuereinheit aktualisiert bei Arbeiten auf der Blockstruktur die in den NC-Steuerungsdaten "versteckt" enthaltene Blockstruktur.

Zugriffe auf die NC-Steuerdaten (Datei 1) wirken auf Datei D2 mit der Blockinformationsstruktur. Dies ist durch die vom DSE erzeugten zusätzlichen Informationen über die Lage und Art der Synchronmarken in den NC-Steuerungsdaten (Abb. &4a, Datei D4) möglich. Die Synchronmarken, die die Blockstruktur ergeben, sind ja in ihrer Art Blockmarken. Sie sind gekennzeichnet durch die Lage innerhalb eines Blockes. Die Synchronmarken die der NC-Programmierer von Hand in die bereits vorhandenen NC-Steuerungsdaten einträgt sind in ihrer Art Einzelmarken. Die Informationen über Art und Lage der Marken in den NC-Steuerdaten sind in der Datei D4 abgelegt.

Wie oben aufgeführt ist eine Unterscheidung durch die Zusatzinformationen möglich.

Dabei stellt die Datensteuereinheit DSE folgende Operationen auf der Blockstruktur und NC-Steuerdaten zur Verfügung:
1.Operationen der Datensteuereinheit DSE auf Blockstruktur:
   a) Block um einen Block vorschieben.
   b) Block um einen Block zurückschieben.
   c) Block löschen.
   d) Block einrichten.
2. Operationen der Datensteuereinheit DSE auf NC-Steuerdaten:
   a) Block-Synchronmarke an Blockanfang einrichten.
   b) Block-Synchronmarke an Blockende einrichten.
   c) Block-Synchronmarke löschen.
   d) Einzel-Synchronmarke einrichten.
   e) Einzel-Synchronmarke löschen.
   f) Einzel-Synchronmarke vor-/zurückschieben.
3. Fehlerbedingung
4. Blockinhalt um einen Block vorschieben.

Beispiel 3: Abb. &21 zeigt die Blockstruktur für die in den darüberliegenden NC-Steuerdaten gezeigten Blockmarken. Verschieben der Blockmarke Teilsystem 2 wirkt auf Blockstruktur. Die NC-Steuerungsdaten nach der Verschiebung sind in Abb. &22 gezeigt. Dazu sieht man die geänderte Blockstruktur darunter.

Beispiel 4: Abb. &23 zeigt die Blockstruktur nach Einfügen einer Marke von Hand, also Typ Einzelmarke: Keine Änderung der Blockstruktur (Datei D2).Die NC-Steuerungsdaten nach der Verschiebung sind in Abb. &24 gezeigt. Dazu sieht man die geänderte Blockstruktur darunter.

Beispiel 3 und 4 machen jedoch deutlich, daß eine der Datensteuereinheit DSE übergeordnete Einheit die Blockstruktur mit den dazugehörenden Synchronmarken (Block- und Einzelmarken) überwachen muß. Dies ist gemäß der Erfindung die Synchronisationseinheit SE.

Die in Abb. &4 gezeigten Dateien D2, D3 und D4 sind also auch notwendig, damit die der Datensteuerungseinheit DSE übergeordnete Synchronisationseinheit SE ihre Funktion erfüllen kann.

Die Datensteuerungseinheit DSE wird neben der Synchronisationseinheit SE auch von der Editoreinheit EE über die Rückkopplungseinheit RE beeinflußt.

Die Editoreinheit EE erfüllt Steuerfunktionen im Bezug auf die verschiedenen Möglichkeiten der Anzeige (NC-Steuerdaten, Blockstruktur, Simulation Visualisierung). Entsprechend den drei Möglichkeiten der Darstellung und einer jeweils möglichen Änderung der Synchronisation wird die Editoreinheit EE unterteilt.

Abb. &25. zeigt die Anzeige der Editoreinheit EE für die NC-Steuerdaten mit den für die Änderung der Synchronisation in den NC-Steuerdaten vorgesehenen Möglichkeiten, die über die Tastatur des dialogorientierten Programmiergerätes aktiviert werden können.

Bezüglich der NC-Steuerdaten sind folgende Möglichkeiten im Bezug auf die Synchronisation vorgesehen:
1. NC-Steuerdaten anzeigen
2. Synchronmarke verschieben
3. Synchronmarke löschen
4. Synchronmarke einfügen

Die jeweilige Aktion ist durch die Position in den angezeigten NC-Steuerdaten auf die die Aktion (o.g. Aktion 2 - 4) wirkt, durch das Teilsystem und durch die Art der Aktion selbst ausgezeichnet. Damit ist eine eindeutige Zuordnung zu den von der DSE verwalteten Informationen möglich. Die NC-Steuerdaten werden für die Anzeige von der Datensteuerungseinheit DSE geliefert.

Die Rückführungseinheit RE liefert also an die Synchronisationseinheit SE und die Datensteuereinheit DSE folgende Befehle
1. NC-Steuerdaten zur Anzeige übergeben.
2. Synchronmarke ausgezeichnet durch Position x in den NC-Steuerdaten nach später verschieben.
3. Synchronmarke ausgezeichnet durch Position x in den NC-Steuerdaten nach früher verschieben.
4. Synchronmarke ausgezeichnet durch Position x in den NC-Steuerdaten löschen.
5. Position x in den NC-Steuerdaten: Synchronmarke einfügen.

Die Rückführungseinheit RE stößt die Synchronisationseinheit SE zur ggf. Modifikation der Synchronisation in Bezug auf die Blockstruktur und NC-Steuerdaten an. Die Datensteuereinheit DSE erledigt für die Synchonisationseinheit SE die entsprechenden Einträge in den NC-Steuerdaten. Die Rückführungseinheit RE aktualisiert dann die Anzeige der NC-Steuerdaten in der Editoreinheit EE.

Abb. &26. zeigt die Anzeige der Editoreinheit EE für die Blockstruktur mit den für die Änderung der Synchronisation in der Blockstruktur vorgesehenen Möglichkeiten, die über die Tastatur des dialogorientierten Programmiergerätes aktiviert werden können.

Bezüglich der Blockstruktur sind folgende Möglichkeiten im Bezug auf die Synchronisation vorgesehen:
1. Blockstruktur anzeigen
2. Block verschieben
3. Block löschen
4. Block einfügen

Die jeweilige Aktion ist durch die Position in der angezeigten Blockstruktur auf die die Aktion (o.g. Aktion 2 - 4) wirkt, durch das Teilsystem und durch die Art der Aktion selbst ausgezeichnet. Damit ist eine eindeutige Zuordnung zu den von der DSE verwalteten Informationen möglich. Die Blockstruktur wird für die Anzeige von der Datensteuereinheit DSE über die Rückführungseinheit RE geliefert.

Die Rückführungseinheit RE liefert also an die Synchonisationseinheit SE und die Datensteuereinheit DSE folgende Befehle
1. Blockstruktur zur Anzeige übergeben.
2. Block ausgezeichnet durch Position x in der Blockstruktur entnehmen und an neuer Position y einfügen.
3. Block ausgezeichnet durch Position x in der Blockstruktur löschen.
4. Position x in der Blockstruktur: Block einfügen.

Die Rückführungseinheit RE stößt die Synchronisationseinheit SE zur ggf. Modifikation der Synchronisation in Bezug auf die Blockstruktur und NC-Steuerdaten an. Die Datensteuereinheit DSE erledigt für die Synchonisationseinheit SE die entsprechenden Einträge in den NC-Steuerdaten. Die Rückführungseinheit RE aktualisiert dann die Anzeige der NC-Steuerdaten in der Editoreinheit EE.

Abb. &27. zeigt die Anzeige der Editoreinheit EE für die Simulation mit den für die Änderung der Synchronisation in der Simulation vorgesehenen Möglichkeiten, die über die Tastatur des dialogorientierten Programmiergerätes aktiviert werden können. Dabei ist zu beachten, daß hier auch Tasten gezeigt sind, die lediglich die Steuerung der Simulation betreffen.

Bezüglich der Simulation sind folgende Möglichkeiten im Bezug auf die Synchronisation vorgesehen:
1. Teilsystem Stop
2. Teilsystem Start
3. Teilsystem wählen
4. Synchronmarke löschen.

Die jeweilige Aktion ist durch die Position des durch die Simulation gerade bei Auslösung einer Aktion gezeigten NC-Satzes in den NC-Steuerdaten (o.g. Aktion 2 + 3) und das Teilsystem ausgezeichnet und durch die Art der Aktion selbst. Damit ist eine eindeutige Zuordnung zu den von der DSE verwalteten Informationen möglich. Die NC-Steuerdaten werden für die Simulation vom DSE geliefert.

Die Rückführungseinheit RE liefert also an die Datensteuereinheit DSE folgende Befehle
1. NC-Steuerdaten zur Simulation übergeben.
2. Position x in den NC-Steuerdaten: Synchronmarke einfügen.
3. Synchronmarke ausgezeichnet durch Position x in den NC-Steuerdaten nach später/früher verschieben. Die Richtung wird dabei durch den Ablauf der Simulation vorwärts/rückwärts vorgegeben.
4. Synchronmarke ausgezeichnet durch Position x in den NC-Steuerdaten löschen.

Die Rückführungseinheit RE stößt die Synchronisationseinheit SE zur ggf. Modifikation der Synchronisation in Bezug auf die Blockstruktur und NC-Steuerdaten an. Die Datensteuereinheit DSE erledigt für die Synchonisationseinheit SE die entsprechenden Einträge in den NC-Steuerdaten. Die Rückführungseinheit RE aktualisiert dann die NC-Steuerdaten für die Simulation. Die Simulation wird fortgesetzt.

Beispiel: Abb. &28 zeigt symbolisch NC-Steuerdaten und Blockstruktur eines gleichzeitig stattfindenden Schrupp- und Bohrvorganges auf einer Drehmaschine. Wird während der Simulation bemerkt, daß wegen drohender Kollision zwischen Schruppwerkzeug und Bohrer der Bohrvorgang erst nach dem Schruppvorgang stattfinden kann, wird eine Synchronmarke auf Teilsystem 1 und 2 per Tastenbetätigung Teilsystem STOP vor dem zur Simulation anstehenden Satz eingefügt. Per Tastenbetätigung "Teilsystem START" wird der Bearbeitungsvorgang auf dem angewählten Teilsystem, in diesem Fall Teilsystem 1, fortgesetzt ohne daß Teilsystem 2 gestartet wird und zwar so lange, "bis Teilsystem START" losgelassen wird. Dann laufen beide Teilsysteme entsprechend den NC-Steuerdaten weiter. Das Betätigen von "Teilsystem START" auf Teilsystem 1 bewirkt ein Verschieben der durch "Teilsystem STOP" eingefügten Synchronmarke auf Teilsystem 1 nach später und zwar solange "Teilsystem START" gedrückt wird und die Simulation weiter läuft. Die Synchronmarke wird dabei in ihrer Lage in den NC-Steuerdaten über die Rückführungseinheit RE durch die Synchonisationseinheit SE, die Datensteuereinheit DSE aktualisiert und durch die Rückführungseinheit RE an die Simulation zurückgeliefert. Die Rückführungseinheit RE stellt dabei durch die Synchronisationseinheit sicher, daß Blockstruktur und NC-Steuerdaten übereinstimmen.

Bei Vor-/Rückwärts-Lauf des Simulations-Films auf den Teilsystemen wird die eingefügten Synchronmarke nach später/früher verschoben.

Unabhängig von den Darstellungsarten kann zwischen den verschiedenen Darstellungen umgeschaltet werden.

Bei der vorliegenden Erfindung leistet die Synchronisationseinheit SE den Abgleich (Synchronisation) der n Teilsysteme und somit die zeitliche Festlegung der Bearbeitungsabschnitte auf den Teilsystemen vor oder nach der Erstellung des eigentlichen NC-Steuerprogrammes. Die Synchronisationseinheit SE wird von der Rückführungseinheit RE angestoßen.

Die Erfindung betrifft unter anderem eine Synchronisationseinheit, welche funktionell so gestaltet ist, daß die Festlegung der Ablauffolge auf den Teilsystemen sowohl "vor" der Festlegung der NC-Steuerdaten in der Editoreinheit EE, als auch die nachträgliche Optimierung unter anderem über einen grafisch dynamischen Simulationsprozeß ermöglicht. Die Zustände und Zustandsänderungen werden dabei nicht nur wie es dem stand der Technik entspricht durch eine dynamische Simulation in den dem Echtzeitablauf entsprechenden Zeitverhältnissen dargestellt, sondern können direkt durch eine Rückkopplungseinheit, welche an die oben erwähnte Synchonisationseinheit SE, die Datensteuereinheit DSE angeschaltet ist, direkt bei der grafischen Simulation, in der Blockstruktur oder in den NC-Steuerdaten verändert werden.

Erfindungsgemäß erzeugt die Synchonisationseinheit SE ein Synchronisationsgerüst entsprechend der Anordnung von Bearbeitungsschritten (Blöcken) in der Editoreinheit EE. Unter Synchronisationsgerüst ist dabei das "Gerippe der Synchronisationsmarken" zu verstehen.

Diese Blöcke werden vom Anwender vor, während oder nach der Festlegung des Bearbeitungsprogrammes angeordnet.

Erfindungsgemäß bedeutet eine Anordnung der Blöcke vor der Festlegung des Bearbeitungsprogrammes eine Eingabe der Zusatzinformation in der Blockstruktur der Editoreinheit EE, d.h. der Synchronisationsblocküberschriften. Dieser eine NC-Satz wird dann durch die Synchronisationseinheit SE synchronisiert. Die Zeitfolge der Synchron-Blöcke ist ohne Inhalte festgelegt. Diese können dann, zu einem späteren Zeitpunkt, z.B. wenn die Grobplanung der Bearbeitungsschritte abgeschlossen ist, mit den NC-Steuerdaten für die Synchron-Blöcke gefüllt werden. Dies wird bei vorliegender Erfindung, die darstellungsübergreifende Anpassungen der Synchronisation durch die Synchonisationseinheit SE gewährleistet, ohne Einschränkung der Freiheiten bei den Änderungen z.B. beim Einfahren der NC-Steuerdaten an der CNC-Maschine erkauft.

Dieses synchronisierte Programm kann dann mit Hilfe der aus der grafischen Simulation bekannten Maßnahmen optimiert werden. Durch Verschieben und Vertauschen von Bearbeitungsblöcken werden Änderungen innerhalb dieser Blöcke direkt berücksichtigt. Es sind ferner Verschiebungen auf NC-Steuersatzebene möglich. Die Synchronisationseinheit leistet dabei die Rekonstruktion der Markenlage, wenn der Anwender bei der Blocksychronisation vorgegebene Marken auf NC-Satzebene verschiebt.

Die von der Datensteuereinheit DSE erzeugten und verwalteten Informationen (Dateien D1 - D4) werden von der Synchronisationseinheit SE auf Anstoß durch die Rückführungseinheit RE überwacht und koordiniert.

Die Überwachung der Synchonisationseinheit SE betrifft:
1. Die Synchronisation der Bearbeitungsblöcke bei Block verschieben, löschen, einfügen durch Editoreinheit EE bei der Darstellung der Blockstruktur.
2. Die Synchronisation der NC-Steuerdaten bei Einzel-Synchronmarke verschieben, löschen, einfügen durch Editoreinheit EE bei der Darstellung der NC-Steuerdaten.
3. Die Synchronisation der NC-Steuerdaten bei Block-Synchronmarke verschieben, löschen, einfügen durch Editoreinheit EE bei der Darstellung der NC-Steuerdaten.

Die Synchonisationseinheit SE unterscheidet Eingriffe in der Blockstruktur oder NC-Steuerdaten durch einen Schalter BlS (Abb. &29).

Ist der Schalter BlS ein, wird die Blockstruktur bei auf den Teilsystemen parallel angeordneten Blöcken einen Schalter BPS auslösen, bei versetzt nacheinander auftretenden Blöcken einen Schalter BVS.

Ist der Schalter BlS aus, wird das Auftreten einer Einzel-Synchronmarke einen Schalter ESS, das Auftreten einer Block-Synchronmarke einen Schalter BSS. Ferner wird dann die Lage der Synchronmarken folgende Schalter SAS, SES, NSS, VSS auslösen, deren Bedeutung in Abb. &29 erklärt ist:
1. Lage der Synchronmarke am Anfang eines Blockes löst den Schalter SAS aus.
2. Lage der Synchronmarke am Ende eines Blockes löst den Schalter SES aus.
3. Lage der Synchronmarke nach anderer Synchronmarke löst den Schalter NSS aus.
4. Lage der Synchronmarke vor anderer Synchronmarke löst den Schalter VSS aus.

Die Aktionen der Editoreinheit EE lösen Änderungen der Blockstruktur, der NC-Steuerdaten in der Datensteuereinheit DSE aus, wenn die Schalter der Synchonisationseinheit SE bestimmte Zustände anzeigen.

Dabei stellt die Datensteuereinheit DSE (wie oben bereits ausgeführt) folgende Operationen auf der Blockstruktur und NC-Steuerdaten zur Verfügung:
1. Operationen der Datensteuereinheit DSE auf Blockstruktur:
   a) Block um einen Block vorschieben.
   b) Block um einen Block zurückschieben.
   c) Block löschen.
   d) Block einrichten.
2. Operationen der Datensteuereinheit DSE auf NC-Steuerdaten:
   a) Block-Synchronmarke an Blockanfang einrichten
   b) Block-Synchronmarke an Blockende einrichten
   c) Block-Synchronmarke löschen
   d) Einzel-Synchronmarke einrichten
   e) Einzel-Synchronmarke löschen
   f) Einzel-Synchronmarke vor-/zurückschieben
3. Fehlerbedingung
4. Blockinhalt um einen Block vorschieben

Tabelle Abb. &30. zeigt wann, welche Operationen durch die Datensteuereinheit DSE ausgelöst werden. Deutlich wird, daß Aktionen der Editoreinheit EE auf Einzel-Synchronmarken die Blockstruktur nicht beeinflussen. Aktionen der Editoreinheit EE auf Block-Synchronmarken beeinflussen die Blockstruktur und die NC-Steuerdaten. Aktionen der Editoreinheit EE auf Blöcke beeinflussen ebenfalls die Blockstruktur und die NC-Steuerdaten.

Der Synchonisationseinheit SE liegt die Blockstruktur vor. Aus ihr erzeugt die Synchonisationseinheit SE die Synchronisation der Bearbeitungsblöcke durch Operationen 2 a + b.

Dies ist insbesondere der Anstoß der Aktualisierung der Marken auf Grund der Änderungen in der Blockstruktur:

Beispiel: Abb.&21 zeigt die Blockstruktur zweier paralleler Blöcke mit den dazugehörenden NC-Steuerdaten. Änderung der Blockstruktur in zwei versetzte Blöcke entsprechend Abb. &22. durch Block versetzen der Editoreinheit EE, erzeugt für Datensteuereinheit DSE folgende Operationen nach Tabelle Abb. &30.(Logik Blockstruktur <-> Blockmarkenstruktur): Blockmarken (Art) Block 1 + 2 Anfang (Lage) löschen Operationen 2c) Blockmarke (Art) Block 1 Ende (Lage) eintragen Operation 2b) Blockmarke (Art) Block 2 Anfang (Lage) eintragen Operation 2a).

Die Datensteuereinheit DSE aktualisiert dann Datei D1 (NC-Steuerdaten), die Datei D2 (Blockstruktur), Datei D3 (Verwaltungsinformationen Verweise Block - NC-Steuerdatenzuordnung) und Datei D4 (Lage, Art der Marken).

Bei Synchronmarken-Aktionen der Editoreinheit EE wird nur bei Blockmarkenaktionen eine Blockoperation im Datensteuereinheit DSE ausgelöst (Tabelle Abb. &30.).

Beispiel 1: Die Blockstruktur Abb. &21. wird durch Verschieben der Blockmarke von Teilsystem 1 nach später in die Blockstruktur Abb. &22. übergeführt. Eine Änderung der Blockstruktur in zwei versetzte Blöcke entsprechend Abb. &22. durch die Blockmarke von Teilsystem 1 nach später bis an das Blockende in der Editoreinheit EE, erzeugt für die Datensteuerungseinheit DSE folgende Operationen nach Tabelle Abb. &30.(Logik Blockstruktur <-> Blockmarkenstruktur): Block 2 um einen Block zurückschieben, da Synchonisationseinheit SE geschaltet (Operation 1b).

Bei Aktionen in der Editoreinheit EE auf Einzelmarken wird laut Operationstabelle Abb. &30. keine Blockoperation ausgelöst. Die Synchonisationseinheit SE übt bei Aktualisierung der Marken aber folgende Kontrollfunktion aus: Die Datensteuereinheit DSE liefert der Synchonisationseinheit SE Zuordnung Block zu Blockmarke und Art der zu verändernden Marke. Die Synchonisationseinheit SE kontrolliert Aktionen auf Einzelmarken auf ihre Verträglichkeit mit Blockstruktur. Die Datensteuereinheit DSE kennt Einzelsynchronmarken, die nachträglich in NC-Steuerdaten eingefügt wurden oder über externe Eingaben auf anderem Programmierplatz z.B. an der CNC der Maschine bei "Einfahren" der NC-Steuerdaten. Gibt es nun eine Veränderung von Marken, sperrt die Synchonisationseinheit SE bestimmte Änderungen auf Marken je nach Markentyp oder aktualisiert die Blockstruktur.

Beispiel 1:Block(-Synchron-)marken: Abb. &21. Die Blockmarke von dem Teilsystem 1 wird nach später verschoben. Die Aktion ist erlaubt, da die Synchonisationseinheit SE den Zusammenhang von Block(-Synchron-)marken zu Blöcken kennt. Tritt die Blockmarke von dem Teilsystem 1 an das Ende von Block 1, löst die Synchonisationseinheit SE eine Blockaktualisierung aus. Abb. &22 zeigt die aktualisierte Blockstruktur.

Beispiel 2: Block(-Synchron-)marken: Abb. &31. Die Block(-Synchron-)marke von dem Teilsystem 1 wird nach später verschoben. Die Operation ist erlaubt, solange eine Einzelmarke nicht erreicht wird. Erreicht die Blockmarke während der Block(-Synchron-)marken-Verschiebung die Einzelmarke, wird diese mit verschoben. Die interne Struktur des Abgleichs (Zuordnung der Marken zueinander) bleibt erhalten. Abb &32 zeigt die NC-Steuerdaten und die Blockstruktur nach dem Ende der Verschiebung.

Beispiel 3: Einzel(-Synchron-)marken: Wie in Abb. &31 gezeigt, wird die Einzelmarke von dem Teilsystem 1 wird nach früher verschoben. Die Operation ist erlaubt, solange die Block(-Synchron-)marke nicht erreicht wird. Erreicht die Einzel(-Synchron-)marke die Block(-Synchron-)marke, tritt eine Fehlerbedingung auf. Dadurch bleibt die interne Struktur des Abgleichs erhalten. Abb. &33 zeigt die NC-Steuerdaten und die Blockstruktur nach dem Ende der Verschiebung.

Beispiel 4: Änderungen durch Änderung der Marken in externem Editor: Die eigentlich redundante Strukturierung der NC-Steuerdaten mittels Kennzeichnung des jeweiligen Blockbeginns durch Zusatzinformation mittels von in der Datensteuereinheit DSE generierten Kommentaren, erlaubt das Erkennen von geänderten Block(-Synchron-)marken, da die Zusatzinformation Blockbeginn mit der Blockinformation aus den Block(-Synchron-)marken abgeglichen werden kann. Eventuelle Einzel(-Synchron-)marken werden als Feinsynchronisationselemente erkannt, da diese zusätzlich zu den Block(-Synchron-)marken auftreten. Die Blockstruktur ergibt sich durch Blockbeginn Kommentar (z.B. Schruppen1).Die Lage der Block(-Synchron-)marken wird auch als zum Blockbeginn verschoben erkannt. Zusätzliche Marken sind immer Einzel(-Synchron-)marken, da diese der Blockstruktur überlagert sind.

## Patentansprüche

1. Dialogorientiertes Programmiersystem zur Erzeugung und Änderung von Steuerungsprogrammen für eine CNC-Werkzeugmaschine, mit
- einer Dateneingabe- und Visualisierungseinrichtung (2, 3) zum Eingeben und/oder Ändern sowie zum gleichzeitigen Abbilden von Daten, die Bearbeitungsprozeßfolgen eines gewünschten Funktions- und Steuerungsablauf der CNC-Werkzeugmaschine darstellen, wobei einzelne Prozesse dieser Bearbeitungsprozeßfolgen durch entsprechend miteinander verbundene Symbole und Blöcke darstellbar und durch Synchronmarken gekennzeichnet und entsprechend dem gewünschten Funktions- und Steuerungsablauf der CNC-Werkzeugmaschine in ihrer zeitlichen Abfolge veränderbar sind;
- einer zentralen Speicher- und Verarbeitungseinheit (1), in der die eingegebenen Daten zu NC-Steuerungsdaten für eine Maschinensteuerung der CNC-Werkzeugmaschine verarbeitet und als Steuerprogramm für die CNC-Werkzeugmaschine an deren Maschinensteuerung über eine Ein-/Ausgabeeinheit ausgegeben werden; wobei die NC-Steuerungsdaten ein jedem Werkzeug und/oder jeder Zusatzeinrichtung der Werkzeugmaschine zugeordnetes Teilsystem beinhaltet
gekennzeichnet durch
- eine Programmeditoreinheit (EE) in der zentralen Speicher- und Verarbeitungseinheit (1), in der die eingegebenen Daten zur Beschreibung des Dialogablaufs und des NC-Steuerprogramms für die CNC-Werkzeugmaschine mit aktuellen Parametern und Applikationseinheiten verbunden und verarbeitet werden;
- eine Datenbasis, in der die eingegebenen Daten aus der Programmeditoreinheit (EE) gemeinsam abgelegt werden, wobei die Datenbasis in einen Bereich für Maschinensteuerdaten und einen Bereich für Dialogsteuerdaten des Programmiersystems unterteilt ist;
- eine Datensteuereinheit (DSE) in der zentralen Speicher- und Verarbeitungseinheit (1), welche Datensteuereinheit (DSE) den Zugriff auf die Maschinensteuerdaten und die Dialogsteuerdaten des Programmiersystems in der Datenbasis und deren Verwaltung ausführt und zur Selektion von in der Datenbasis abgelegten Teildaten eingerichtet ist;
- eine mit der Datensteuereinheit (DSE) verbundene Synchronisationseinheit (SE) in der zentralen Speicher- und Verarbeitungseinheit (1) zum Abgleich von Teilsystemen und zum zeitlichen Festlegen von Bearbeitungsprozeßfolgen der Teilsysteme; wobei
- in dem Steuerprogramm für die CNC-Werkzeugmaschine Ablaufdaten und von der Datensteuereinheit (DSE) selektierte Teildaten in Form eines Synchronisationsgerüstes erstellt werden, das durch Bearbeitungsschritte bzw. Maschinenprogrammsätze ergänzbar ist; und
- eine mit der Datensteuereinheit (DSE) verbundene Rückkoppelungseinheit (RE) in der zentralen Speicher- und Verarbeitungseinheit (1), welche Rückkoppelungseinheit (RE) auf das Steuerprogramm für die CNC-Werkzeugmaschine zugreift und Zustandsinformationen aus einem Simulationslauf des Steuerprogramms zum Einfügen, Löschen oder Verschieben der Synchronmarken heranzieht.

2. Dialogorientiertes Programmiersystem nach Anspruch 1, dadurch gekennzeichnet, daß die Synchronmarken Start- und Stopbedingungen für einzelne Teilsysteme und/oder Bearbeitungsabschnitte auslösen.

3. Dialogorientiertes Programmiersystem nach Anspruch 1 oder 2, dadurch gekennzeichnet, daß ein Einfügen, Löschen oder Verschieben der Synchronmarken in dem synchronisierten Programm auf der Satz-Ebene der NC-Steuerungsdaten erfolgt.

4. Dialogorientiertes Programmiersystem nach Anspruch 1 oder 2, dadurch gekennzeichnet, daß ein Einfügen, Löschen uoder Verschieben der Synchronmarken in dem synchronisierten Programm auf einer Simulations-/Visualisierungs-Ebene des Bearbeitungsvorgangs erfolgt.

5. Dialogorientiertes Programmiersystem nach einem der vorhergehenden Ansprüche, dadurch gekennzeichnet, daß die Datensteuereinheit (DSE) die NC-Steuerdaten in Blockstrukturdateninformationen entsprechend der Lage der Synchronmarken zerlegt.

6. Dialogorientiertes Programmiersystem nach dem vorherigen Anspruch, dadurch gekennzeichnet, daß in der Datensteuereinheit (DSE)
- eine erste Einrichtung (TeS) zum Erkennen des Auftretens eines Teilsystems in den NC-Steuerdaten,
- eine zweite Einrichtung (SyS) zum Erkennen einer Synchronmarke eines Teilsystems in den NC-Steuerdaten, und
- eine dritte Einrichtung (SaS) zum Erkennen eines Satzes in den NC-Steuerdaten
vorgesehen ist.

7. Dialogorientiertes Programmiersystem nach Anspruch 6, dadurch gekennzeichnet, daß die erste, die zweite und die dritte Einrichtung (TeS, SyS, SaS) jeweils als logische Schalter ausgebildet ist, denen jeweils ein Zähler (TeZ, SyZ, SaZ) nachgeschaltet ist.

8. Dialogorientiertes Programmiersystem nach Anspruch 7, dadurch gekennzeichnet, daß der erste, zweite und dritte Schalter (TeS, SyS, SaS) ankommende NC-Steuerdaten in Abhängigkeit von den Ständen der Zähler (TeZ, SyZ, SaZ) in unterschiedliche Behälter (Teilsystembehälter, Markenbehälter, Satzbehälter) leitet.

9. Dialogorientiertes Programmiersystem nach Anspruch 8, dadurch gekennzeichnet, daß die NC-Steuerdaten in den unterschiedlichen Behältern (Teilsystembehälter, Markenbehälter, Satzbehälter) sortiert werden, wobei das Erkennen eines Teilsystems, einer Synchronmarke (Einzelsynchronmarke, Blocksynchronmarke), oder eines Satzes jeweils zum Weiterschalten in allen Behältern führt.

10. Dialogorientiertes Programmiersystem nach einem der Ansprüche 1-9, gekennzeichnet durch eine vierte Einrichtung (BlS) in der Synchronisatonseinheit (SE), die Eingriffe in der Blockstruktur oder der NC-Steuerdaten unterscheidet.

11. Dialogorientiertes Programmiersystem nach Anspruch 10, dadurch gekennzeichnet, daß die vierte Einrichtung ein logischer Schalter (BlS) ist, der in seinem aktivierten Zustand bewirkt, daß
- eine Blockstruktur bei auf einem Teilsystem parallel angeordneten Blöcken eine fünfte Einrichtung (BPS) aktiviert, und
- eine Blockstruktur bei auf einem Teilsystem versetzt nacheinander angeordneten Blöcken eine sechste Einrichtung (BVS) aktiviert.

12. Dialogorientiertes Programmiersystem nach Anspruch 11, dadurch gekennzeichnet, daß der logische Schalter (BlS) in seinem unaktivierten Zustand bewirkt, daß
- beim Auftreten einer Einzelsynchronmarke eine siebte Einrichtung (ESS) aktiviert wird, und
- beim Auftreten einer Blocksynchronmarke eine achte Einrichtung (BSS) aktiviert wird.

## Claims

1. A dialog-oriented programming system for the generation and modification of control programs for a CNC machine tool, comprising
- a data input and visualization means (2, 3) for the input and/or change and the simultaneous display of data which represent the machining process sequences of a desired function and control sequence of the CNC machine tool, with individual processes of these machining process sequences being representable by correspondingly interconnected symbols and blocks and characterized by synchronization flags and modifiable in their time sequence in accordance with the desired function and control sequence of the machine tool;
- a central storage and processing unit (1) in which the input data are processed to NC control data for a machine controller of the CNC machine tool and output via an input/ output unit as a control program for the CNC machine tool to its machine controller; with the NC control data including a subsystem assigned to each tool and/or each auxiliary attachment of the machine tool;
characterized by
- a program editor unit (EE) in the central storage and processing unit (1) in which the input data for the description of the dialog sequence and the NC control program for the CNC machine tool are connected with current parameters and application units and processed;
- a database in which the input data from the program editor unit (EE) are stored together, with the database being divided into an area for the machine control data and an area for the dialog control data;
- a data control unit (DSE) in the central storage and processing unit (1), said data control unit (DSE) effecting the access to the machine control data and the dialog control data of the programming system in the database and their administration and being adapted for the selection of partial data which are stored in the database;
- a synchronization unit (SE) in the central storage and processing unit (1), which is connected with the data control unit (DSE) for matching the subsystems and for establishing the machining process time sequences of the subsystems; where
- in the control program for the CNC machine tool sequence data and partial data selected by the data control unit (DSE) in the form of a synchronization framework which can be supplemented by machining steps or machine program records, respectively, are generated; and
- a feedback unit (RE) which is connected with the data control unit (DSE) in the central storage and processing unit (1), which feedback unit (RE) accesses the control program for the CNC machine tool and uses status information from a simulation run of the control program for inserting, erasing or shifting of the synchronization flags.

2. A dialog-oriented programming system according to Claim 1, characterized in that the synchronization flags initiate start and stop conditions for the individual subsystems and/ or machining sections.

3. A dialog-oriented programming system according to Claim 1 or 2, characterized in that any inserting, erasing or shifting of the synchronization flags in the synchronized program is effected on the record level of the NC control data.

4. A dialog-oriented programming system according to Claim 1 or 2, characterized in that any inserting, erasing or shifting of the synchronization flags in the synchronized program is effected in a simulation/visualization level of the machining operation.

5. A dialog-oriented programming system according to one of the previous claims, characterized in that the data control unit (DSE) divides the NC control data into block structure information corresponding to the location of the synchronization flags.

6. A dialog-oriented programming system according to one of the previous claims, characterized in that in the data control unit (DSE)
- a first means (TeS) for detecting the occurrence of a subsystem in the NC control data,
- a second means (SyS) for detecting a synchronization flag of a subsystem in the NC control data, and
- a third means (SaS) for detecting a record in the NC control data
are provided.

7. A dialog-oriented programming system according to Claim 6, characterized in that the first, second and third means (TeS, SyS,SaS) each is adapted as a logical switch with a counter (TeZ, SyZ, SaZ) each being arranged downstream of it.

8. A dialog-oriented programming system according to Claim 7, characterized in that the first, second and third switch (TeS, SyS, SaS) directs incoming NC control data depending on the values of the counters (TeZ, SyZ, SaZ) into different frames (subsystem frame, flag frame, record frame).

9. A dialog-oriented programming system according to Claim 8, characterized in that the NC control data are sorted in the various frames (subsystem frame, flag frame, record frame), with the detection of a subsystem, a synchronization flag (single synchronization flag, block synchronization flag) or a record resulting in an indexing in all frames.

10. A dialog-oriented programming system according to one of Claims 1 to 9, characterized in a fourth means (BlS) in the synchronization unit (SE) which differentiates interventions in the block structure or in the NC control data.

11. A dialog-oriented programming system according to Claim 10, characterized in that the fourth means is a logical switch (BlS) which in its activated condition causes that
- a block structure activates a fifth means (BPS) with block arranged in parallel in a subsystem, and
- a block structure activates a sixth means (BVS) with block arranged offset in succession in a subsystem.

12. A dialog-oriented programming system according to Claim 11, characterized in that the logical switch (BlS) in its non-activated condition causes that
- a seventh means (ESS) is activated upon the occurrence of a single synchronization flag, and
- an eighth means (BSS) is activated upon the occurrence of a block synchronization flag.

## Revendications

1. Système de programmation orientée dialogue pour générer et modifier des programmes de commande destinés à une machine-outil CNC, comprenant
- un dispositif d'introduction et de visualisation de données (2, 3) pour introduire et/ou modifier, ainsi que pour visualiser simultanément des données, lesquelles représentent des suites d'un processus d'usinage ayant un déroulement fonctionnel et de commande désiré de la machine-outil CNC, des processus individuels de ces suites de processus d'usinage pouvant être représentés par des symboles et des blocs convenablement reliés entre eux, et pouvant être repérés par des marques de synchronisation et modifiés dans leur succession dans le temps en conformité avec le déroulement fonctionnel et de commande désiré de la machine-outil CNC;
- une unité centrale de mémorisation et de traitement (1), dans laquelle les données introduites sont tranformées en données de commande numérique ou données de CN pour une commande machine de la machine-outil CNC, et par laquelle elles sont délivrées, à travers une unité d'entrée/sortie, en tant que programme de commande pour la machine-outil CNC, à la commande machine de celle-ci; les données de CN contenant, coordonné à chaque outil et/ou à chaque dispositif auxiliaire de la machine-outil, un système partiel,
caractérisé par
- une unité d'édition de programmes (EE), contenue dans l'unité centrale de mémorisation et de traitement (1), dans laquelle les données introduites, en vue de la description du déroulement du dialogue et du programme de commande numérique pour la machine-outil CNC, sont liées à des paramètres et des unités d'application actuels et traitées;
- une base de données dans laquelle sont stockées collectivement les données introduites, provenant de l'unité d'édition de programmes (EE), la base de données étant divisée en une partie pour données de commande de la machine et une partie pour des données de commande d'un dialogue du système de programmation;
- une unité de commande de données (DSE), contenue dans l'unité centrale de mémorisation et de traitement (1), unité de commande de données (DSE) qui exécute l'accès aux données de commande de la machine et aux données de commanee de dialogue du système de programmation dans la base de données, ainsi que leur gestion, et qui est agencée pour la sélection de données partielles stockées dans la base de données;
- une unité de synchronisation (SE), contenue dans l'unité centrale de mémorisation et de traitement (1) et reliée à l'unité de commande de données (DSE), qui est destinée à accorder mutuellement des systèmes partiels et à fixer dans le temps des suites de processus d'usinage des systèmes partiels;
- avec établissement, dans le programme de commande pour la machine-outil CNC, de données de déroulement et de données partielles, sélectionnées par l'unité de commande de données (DSE), sous la forme d'une charpente de synchronisation, laquelle peut être complétée par des pas d'usinage ou des articles de programme machine; et
- une unité de réintégration (RE), contenue dans l'unité centrale de mémorisation et de traitement (1) et reliée à l'unité de commande de données (DSE), unité de réintégration (RE) qui accède au programme de commande pour la machine-outil CNC et fait appel à des informations supplémentaires dues à un passage de simulation du programme de commande, pour insérer, effacer ou décaler des marques de synchronisation.

2. Système de programmation orientée dialogue selon la revendication 1, caractérisé en ce que les marques de synchronisation déclenchent des conditions de départ ou d'arrêt pour différents système partiels et/ou parties d'usinage.

3. Système de programmation orientée dialogue selon la revendication 1 ou 2, caractérisé en ce qu'une insertion, un effacement ou un décalage de marques de synchronisation dans le programme synchronisé s'effectue au niveau des articles des données de CN.

4. Système de programmation orientée dialogue selon la revendication 1 ou 2, caractérisé en ce qu'une insertion, un effacement ou un décalage de marques de synchronisation dans le programme synchronisé s'effectue à un niveau de simulation/visualisation de l'opération d'usinage.

5. Système de programmation orientée dialogue selon une des revendications précédentes, caractérisé en ce que l'unité de commande de données (DSE) décompose les données de CN en informations de données d'organigramme suivant la position des marques de synchronisation.

6. Système de programmation orientée dialogue selon la revendication précédente, caractérisé en ce que l'unité de commande de données (DSE) comprend
- un premier dispositif (TeS) pour détecter l'apparition d'un système partiel dans les données de CN,
- un deuxième dispositif (SyS) pour détecter une marque de synchronisation d'un système partiel dans les données de CN et
- un troisième dispositif (SaS) pour détecter un article dans les données de CN.

7. Système de programmation orientée dialogue selon la revendication 6, caractérisé en ce que les premier, deuxième et troisième dispositifs (TeS, SyS, SaS) sont réalisés chacun comme un commutateur logique suivi d'un compteur (TeZ, SyZ, SaZ).

8. Système de programmation orientée dialogue selon la revendication 7, caractérisé en ce que les premier, deuxième et troisième commutateurs (TeS, SyS, SaS) acheminent des données de CN arrivantes vers différents contenants (contenants de systèmes partiels, contenants de marques, contenants d'articles) en fonction des positions des compteurs (TeZ, SyS, SaZ).

9. Système de programmation orientée dialogue selon la revendication 8, caractérisé en ce que les données de CN sont triées dans les différents contenants (contenants de systèmes partiels, contenants de marques, contenants d'articles), la détection d'un sytème partiel, d'une marque de synchronisation (il peut s'agir d'une marque de synchronisation individuelle ou d'une marque de synchronisation de blocs) ou d'un article entraînant chaque fois la connexion pour l'acheminement vers tous les contenants.

10. Système de programmation orientée dialogue selon une des revendications 1 - 9, caractérisé par un quatrième dispositif (BlS) dans l'unité de synchronisation (SE), dispositif qui distingue entre des interventions dans l'organigramme et des interventions dans les données de CN.

11. Système de programmation orientée dialogue selon la revendication 10, caractérisé en ce que le quatrième dispositif est un interrupteur logique (BlS) qui, dans son état activé, a pour effet que
- un organigramme active un cinquième dispositif (BPS) en présence de blocs disposés en parallèle sur un système partiel et
- un organigramme active un sixième dispositif (BVS) en présence de blocs disposés avec un décalage l'un à la suite de l'autre sur un système partiel.

12. Système de programmation orientée dialogue selon la revendication 11, caractérisé en ce que l'interrupteur logique (BlS), dans son état désactivé, a pour effet que
- un septième dispositif (ESS) est activé à l'apparition d'une marque de synchronisation individuelle et
- un huitième dispositif (BSS) est activé à l'apparition d'une marque de synchronisation de blocs.
